(19) Europäisches Patentamt
European Patent Office
Office européen des brevets

(11) Veröffentlichungsnummer: **0 056 975**
**B1**

(12) # EUROPÄISCHE PATENTSCHRIFT

(45) Veröffentlichungstag der Patentschrift: **16.01.85**

(51) Int. Cl.⁴: **C 09 B 62/085**, C 09 B 62/51, D 06 P 3/66, D 06 P 3/10

(21) Anmeldenummer: **82100361.3**

(22) Anmeldetag: **20.01.82**

(54) **Wasserlösliche Monoazoverbindungen, Verfahren zu ihrer Herstellung und ihre Verwendung als Farbstoffe.**

(30) Priorität: **24.01.81 DE 3102287**

(43) Veröffentlichungstag der Anmeldung: **04.08.82 Patentblatt 82/31**

(45) Bekanntmachung des Hinweises auf die Patenterteilung: **16.01.85 Patentblatt 85/3**

(84) Benannte Vertragsstaaten: **CH DE FR GB LI**

(56) Entgegenhaltungen:
**EP - A - 0 021 105**
**EP - A - 0 022 575**
**FR - A - 2 084 024**
**FR - A - 2 437 426**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Otten, Joachim, Dr., Verstorben (DE)**
Erfinder: **Steuernagel, Hans Helmut, Dr., An den Römergärten 1, D-6233 Kelkheim (Taunus) (DE)**

**EP 0 056 975 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung liegt auf dem Gebiet der faserreaktiven Monoazofarbstoffe.

Aus der japanischen Patentbekanntmachung Sho-55-39672, aus der Europäischen Patentanmeldungs-Veröffentlichung 0 021 105 und aus der deutschen Patentschrift 1 265 698 sind Monoazofarbstoffe mit einer $\beta$-Sulfatoäthylsulfonyl-Gruppe und einem Chlortriazinylaminorest als faserreaktive Reste bekannt. Diese zeigen jedoch gewisse Mängel. «So zeigen die Monoazofarbstoffe der Europäischen Patentanmeldungs-Veröffentlichung Nr. 0 021 105 A, die den nachstehend definierten neuen Verbindungen der Erfindung konstitutionell am nächsten stehen, keinen konstanten Druckausfall bei Einsatz unterschiedlicher, insbesondere geringer Mengen an Alkalimittel, und deren Wollfärbungen zeigen ein starkes Anblutverhalten auf begleitendem Baumwollgewebe in der Prüfung auf alkalische Schweissechtheit».

Mit der vorliegenden Erfindung wurden nunmehr vorbesserte wasserlösliche Monoazoverbindungen entsprechend der allgemeinen Formel (1)

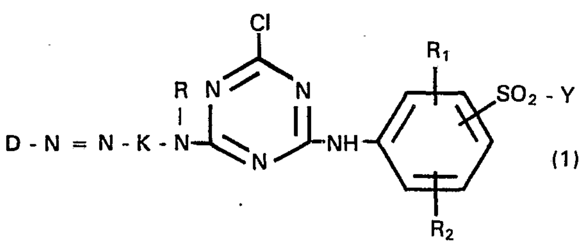
(1)

gefunden, die wie folgt definiert ist:

D ist der Phenyl- oder Naphthylrest, die beide substituiert sind, beispielsweise durch 1, 2 oder 3 Substituenten aus der Gruppe Chlor, Brom, Fluor, Sulfo, Carboxy, Alkyl von 1 bis 4 C-Atomen, wie insbesondere Methyl und Äthyl, Alkoxy von 1 bis 4 C-Atomen wie Methoxy und Äthoxy, Trifluormethyl, Nitro, Styryl, Nitrostyryl, Benzthiazol-2-yl, Methylbenzthiazol-2-yl, Methoxy-benzthiazol-2-yl, Sulfo-benzthiazol-2-yl, Methyl-sulfo-benzthiazol-2-yl, Sulfamoyl, Carbamoyl, Methylsulfonyl und Äthylsulfonyl, wobei mindestens einer dieser Substituenten eine wasserlöslich machende Gruppe oder ein solcher Substituent ist, der eine wasserlöslich machende Gruppe besitzt;

R ist ein Wasserstoffatom oder eine Alkylgruppe von 1 bis 6 C-Atomen oder die $\beta$-Hydroxyäthyl- oder die $\beta$-Sulfatoäthyl-Gruppe;

$R_1$ ist ein Wasserstoffatom oder ein Chloratom oder eine Alkylgruppe von 1 bis 4 C-Atomen, wie die Methyl- oder Äthylgruppe, oder eine Alkoxygruppe von 1 bis 4 C-Atomen, wie die Methoxy- oder Äthoxygruppe;

$R_2$ ist ein Wasserstoffatom oder eine Alkylgruppe von 1 bis 4 C-Atomen, wie die Methyl- oder Äthylgruppe, oder eine Alkoxygruppe von 1 bis 4 C-Atomen, wie die Methoxy- oder Äthoxygruppe;

Y ist die Vinylgruppe oder eine Gruppe der Formel (2)

$$-CH_2-CH_2-X \qquad (2)$$

in welcher X einen als Anion abspaltbaren Substituenten, ausgenommen die Sulfatogruppe, bedeutet;

K ist ein Rest der Formel (3) oder (4)

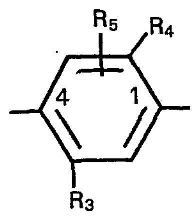
(3)

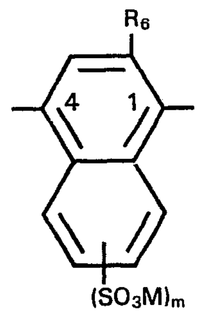
(4)

in welchen jeweils die Azogruppe an die 4-Stellung gebunden ist und

$R_3$ ein Wasserstoffatom oder eine Alkylgruppe von 1 bis 4 C-Atomen, wie die Methyl- oder Äthylgruppe, eine Alkoxygruppe von 1 bis 4 C-Atomen, wie die Methoxy- oder Äthoxygruppe, eine Alkanoylaminogruppe von 2 bis 4 C-Atomen, wie die Propionylamino- und insbesondere die Acetylaminogruppe, eine Aryloylaminogruppe, wie die Benzoylaminogruppe, die Ureido- oder eine N'-Aryl-ureido-Gruppe, insbesondere die N'-Phenyl-ureido-Gruppe, eine Alkylsulfonylaminogruppe von 1 bis 4 C-Atomen, wie die Äthylsulfonylamino- und insbesondere die Methylsulfonylaminogruppe, eine Arylsulfonylaminogruppe, wie die Tolyl-sulfonylaminogruppe oder die Phenylsulfonylaminogruppe, oder die Hydroxy-acetylamino-Gruppe bedeutet,

$R_4$ ein Wasserstoffatom, eine Alkylgruppe von 1 bis 4 C-Atomen, wie die Methyl- oder Äthylgruppe, eine Alkoxygruppe von 1 bis 4 C-Atomen, wie die Methoxy- oder Äthoxygruppe, oder die Sulfogruppe ist,

$R_5$ ein Wasserstoffatom oder eine Alkylgruppe von 1 bis 4 C-Atomen, wie die Methyl- oder Äthylgruppe, oder eine Alkoxygruppe von 1 bis 4 C-Atomen, wie die Methoxy- oder Äthoxygruppe, darstellt,

$R_6$ für ein Wasserstoffatom oder eine Alkoxygruppe von 1 bis 4 C-Atomen, wie die Methoxy- oder Äthoxygruppe, steht,

M ein Wasserstoffatom oder das Äquivalent eines Alkali- oder Erdalkali- oder dreiwertigen Metalls, insbesondere Natrium oder Kalium oder das Äquivalent des Calciums, bedeutet und

m die Zahl Null oder 1 ist,

wobei R, $R_1$, $R_2$, $R_3$, $R_4$, $R_5$ und $R_6$ gleich oder voneinander verschieden sein können und das Molekül der Formel (1) zwingend mindestens zwei wasserlöslich machende Gruppen, wie beispielsweise Sulfo-, Carboxy-, Sulfato-, Phosphato- und Thiosulfatogruppen, enthält.

Die neuen Verbindungen entsprechend der Formel (1) können in Form der freien Säure und in Form ihrer Salze vorliegen. Bevorzugt sind sie in Form der Salze, insbesondere der Alkali- und Erdalkalimetallsalze, insbesondere in Form der Natrium-, Kalium- und Calciumsalze. Sie finden bevorzugt in Form der Alkalimetallsalze Verwendung zum Färben und Bedrucken von hydroxy- oder carbonamidgruppenhaltigen Materialien.

Bevorzugt sind Verbindungen mit Y gleich der Vinylgruppe oder der β-Thiosulfatoäthyl-, β-Phosphatoäthyl-, β-Acetoxyäthyl- oder β-Chloräthyl-Gruppe.

Die Erfindung betrifft weiterhin Verfahren zur Herstellung der oben genannten und definierten Verbindungen der allgemeinen Formel (1). Sie werden erfindungsgemäss in der Weise ausgeführt, dass man entweder eine Azoverbindung der allgemeinen Formel (5)

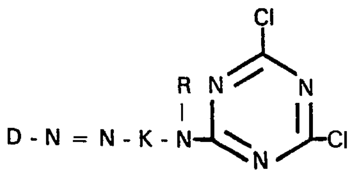

(5)

in welcher D, K und R die obengenannten Bedeutungen haben, mit einem Amin der allgemeinen Formel (6)

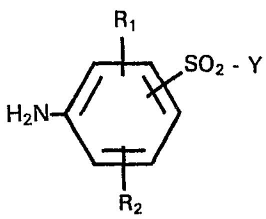

(6)

in welcher $R_1$, $R_2$ und Y die obengenannten Bedeutungen haben, kondensiert oder eine Aminoazoverbindung der allgemeinen Formel (7)

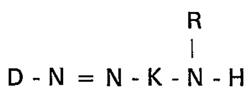

(7)

in welcher D, K und R die obengenannten Bedeutungen haben, mit einer Dichlortriazinylaminoverbindung der allgemeinen Formel (8)

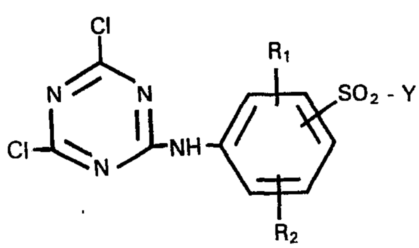

(8)

in welcher $R_1$, $R_2$ und Y die obengenannten Bedeutungen haben, kondensiert, wobei in diesen Verfahren die Ausgangsverbindungen der Formeln (5) und (6) bzw. (7) und (8) so ausgewählt sind, dass beide zusammen mindestens zwei wasserlöslich machende Gruppen enthalten.

Die Azoverbindung der allgemeinen Formel (5) kann analog bekannten Verfahrensweisen in erfindungsgemässer Weise durch Umsetzung einer Aminoazoverbindung der allgemeinen Formel (7) mit Cyanurchlorid (2,4,6-Trichlor-1,3,5-triazin) hergestellt werden. Die Ausgangsverbindung der allgemeinen Formel (8) kann erfindungsgemäss durch Umsetzung einer Verbindung der allgemeinen Formel (6) mit Cyanurchlorid erhalten werden. Die Aminoazoverbindung der allgemeinen Formel (7) wird in an und für sich bekannter Weise durch Umsetzung der Diazokomponente der Formel $D-NH_2$ mit D der obengenannten Bedeutung mit einer Kupplungskomponente der Formel H-K-NHR mit K und R der obengenannten Bedeutungen erhalten.

Sowohl die Umsetzung von Cyanurchlorid mit der Aminoazoverbindung der Formel (7) zur Verbindung der Formel (5) als auch die Umsetzung von Cyanurchlorid mit der Aminoverbindung der Formel (6) zur Verbindung der Formel (8) kann in organischem oder wässrig-organischem Medium erfolgen. Vorzugsweise geschieht sie in wässrigem Medium unter Zusatz säurebindender Mittel, wie Alkali- oder Erdalkalicarbonaten, Alkali- oder Erdalkalihydrogencarbonaten oder -hydroxiden, Alkaliacetaten, wie die Alkali- und Erdalkalimetalle vorzugsweise Natrium, Kalium und Calcium sind, und wie tertiäre Amine, beispielsweise Pyridin oder Triäthylamin oder Chinolin, bei einer Temperatur zwischen —10°C und +40°C, vorzugsweise unter +30°C, insbesondere bei einer Temperatur zwischen 0°C und +10°C, bei einem pH-Wert zwischen 1,0 und 6,8.

Die erfindungsgemässe Umsetzung der Dichlor-triazinylamino-Verbindung der Formel (5) oder der Formel (8) mit einem entsprechenden Amin der Formel (6) bzw. (7) zu den erfindungsgemässen Verbindungen der allgemeinen Formel (1) kann ebenso in organischem oder wässrig-organischem Medium erfolgen. Vorzugsweise wird sie jedoch in wässrigem Medium durchgeführt, wobei erforderlichenfalls säurebindende Mittel, wie die oben angegebenen, zugesetzt werden können. Das erfindungsgemässe Verfahren wird vorzugsweise bei einer Temperatur zwischen 10 und 60°C, insbesondere bevorzugt zwischen 20 und 50°C, bei einem pH-Wert zwischen 2,0 und 9, insbesondere zwischen 3,0 und 8,0, ausgeführt.

Aminoverbindungen der Formel $D-NH_2$ mit D der obengenannten Bedeutung, die zum Aufbau der erfindungsgemässen Verbindungen der allgemeinen Formel (1) dienen und zur Herstellung der Zwischenprodukte entsprechend den allgemeinen Formeln (7) und (5) eingesetzt werden, sind beispielsweise: 1-Aminobenzol-2-sulfonsäure, 1-Aminobenzol-3- und -4-sulfonsäure, 2-Amino-4-sulfobenzoesäure, 2-Amino-5-sulfo-benzoesäure, 4-Amino-2-sulfo-benzoesäure, 4-Amino-toluol-2- und -3-sulfonsäure, 2-Amino-toluol-4- und -5-sulfonsäure, 2-Amino-toluol-4-carbonsäure, Anthranilsäure, 4-Amino-benzoesäure, 2-Amino-anisol-4- und -5-sulfonsäure, 4-Amino-anisol-2- und -3-sulfonsäure, 3-Chlor-2-amino-toluol-5-sulfonsäure, 4-Chlor-2-amino-toluol-5-sulfonsäure, 5-Chlor-2-amino-toluol-3- und -4-sulfonsäure, 6-Chlor-2-amino-toluol-4-sulfonsäure, 6-Chlor-3-amino-toluol-4-sulfonsäure, 1-Aminobenzol-2,5-disulfonsäure, 1-Aminobenzol-2,4- und -3,5-disulfonsäure, 2-Amino-toluol--3,5-disulfonsäure, 2-Amino-toluol-4,5- und -4,6--disulfonsäure, 4-Amino-toluol-2,5-disulfonsäure, 2-(3'-Sulfo-4'-aminophenyl)-6-methyl-benzthiazol--7-sulfonsäure, 4-Nitro-4'-aminostilben-2,2'-disulfonsäure, 2-Aminonaphthalin-1-sulfonsäure, 2-Aminonaphthalin-5- und -6-sulfonsäure, 2-Aminonaphthalin-7- und -8-sulfonsäure, 1-Aminonaphthalin-2-, -3-, -4-, -5-, -6-, -7- und -8-sulfonsäure, 2-Aminonaphthalin-4,8-disulfonsäure, 2-Aminonaphthalin--6,8-disulfonsäure, 2-Aminonaphthalin-1,5- und -1,7-disulfonsäure, 2-Aminonaphthalin-5,7-, -3,6-, -3,7- und -4,7-disulfonsäure, 1-Aminonaphthalin--2,4-, -2,5-, -3,6-, -3,7-, -3,8-, -4,6-, -4,7-, -4,8-, -5,7- und -6,8-disulfonsäure, 2-Aminonaphthalin--3,6,8-trisulfonsäure, 2-Aminonaphthalin-4,6,8- und -1,5,7-trisulfonsäure, 1-Aminonaphthalin--2,4,7-trisulfonsäure, 1-Aminonaphthalin-2,4,8-, -3,5,7-, -3,6,8- und -4,6,8-trisulfonsäure.

Verbindungen der allgemeinen Formel H-K-NHR mit K und R der obengenannten Bedeutungen, die zur Herstellung der erfindungsgemässen Verbindungen dienen und zur Synthese der Ausgangsverbindungen der allgemeinen Formeln (7) und (5) eingesetzt werden können, sind beispielsweise:

Anilin, 2-Amino-toluol, 3-Amino-toluol, 2-Amino--anisol, 1-Amino-3-acetylamino-benzol, 1-Amino-3--propionylamino-benzol, 1-Amino-3-benzoylamino--benzol, 1-Amino-3-hydroxy-acetylamino-benzol, 3--Amino-phenylharnstoff, N'-Phenyl-N-(3-aminophenyl)-harnstoff, 1-Amino-3-methylsulfonylamino-benzol, 1-Amino-3-phenylsulfonylamino-benzol, 1--Amino-3-(p-tolyl-sulfonylamino)-benzol, 2-Methoxy-5-methyl-anilin, 2,5-Dimethylanilin, 2,5-Dimethoxy-anilin, 2,3-Dimethyl-anilin, 3,5-Dimethyl-anilin, 2,6-Dimethyl-anilin, 1-Amino-2-methyl-5--acetylamino-benzol, 1-Amino-2-methoxy-5-acetylamino-benzol, 1-Amino-3-acetylamino-benzol-6--sulfonsäure, 1-Amino-3-N'-phenylureido-benzol-6--sulfonsäure, 3-Amino-anisol, N-Methyl-anilin, N--Äthyl-anilin, N-Butyl-anilin, N-(β-Hydroxyäthyl)-anilin, N-(β-Sulfatoäthyl)-anilin, 3-(N-Methylamino)-toluol, 3-(N-Methylamino)-anisol, 3-(N-Äthylamino)--toluol, 3-(N-Äthylamino)-anisol, 1-Amino-naphthalin, 1-Aminonaphthalin-6-sulfonsäure, 1-Amino-naphthalin-7- und -8-sulfonsäure, 1-Amino-2-methoxy-6-sulfo-naphthalin und 1-Amino-2-äthoxy-6--sulfo-naphthalin.

Amine der allgemeinen Formel (6), die zur Synthese der erfindungsgemässen Verbindungen dienen können, sind beispielsweise 1-Amino-4-(β-thiosulfatoäthylsulfonyl)-benzol, 1-Amino-4-(β-phosphatoäthylsulfonyl)-benzol, 1-Amino-4-(β-chloräthylsulfonyl)-benzol, 1-Amino-4-(β-acetoxyäthylsulfonyl)-benzol, 1-Amino-4-vinylsulfonyl-benzol, 1-Amino-3-vinylsulfonyl-benzol, 1-Amino-2-methoxy-5--vinylsulfonyl-benzol, 1-Amino-2-methoxy-4-vinylsulfonyl-benzol, 1-Amino-2-methyl-5-vinylsulfonyl--benzol, 1-Amino-2-methyl-4-vinylsulfonyl-benzol, 1-Amino-4-methoxy-5-vinylsulfonyl-benzol, 1-Amino-4-methyl-5-vinylsulfonyl-benzol, 1-Amino-2--methoxy-5-methyl-4-vinylsulfonyl-benzol, 1-Amino-2,5-dimethoxy-4-vinylsulfonyl-benzol, 1-Amino--2,4-dimethoxy-5-vinylsulfonyl-benzol, 1-Amino-2--methyl-5-methoxy-4-vinylsulfonyl-benzol, 2-Chlor--1-amino-5-vinylsulfonyl-benzol, 4-Chlor-1-amino--2-methyl-3-vinylsulfonyl-benzol, 5-Chlor-1-amino--2-methoxy-4-vinylsulfonyl-benzol, 1-Amino-3-(β--thiosulfatoäthylsulfonyl)-benzol, 1-Amino-2-methoxy-5-(β-thiosulfatoäthylsulfonyl)-benzol, 1-Amino--2-methoxy-4-(β-thiosulfatoäthylsulfonyl)-benzol, 1-Amino-2-methyl-5-(β-thiosulfatoäthylsulfonyl)--benzol, 1-Amino-2-methyl-4-(β-thiosulfatoäthylsulfonyl)-benzol, 1-Amino-4-methoxy-5-(β-thiosulfatoäthylsulfonyl)-benzol, 1-Amino-4-methyl-5-(β--thiosulfatoäthylsulfonyl)-benzol, 1-Amino-2-methoxy-5-methyl-4-(β-thiosulfatoäthylsulfonyl)-benzol, 1-Amino-2,5-dimethoxy-4-(β-thiosulfatoäthylsulfonyl)-benzol, 1-Amino-2,4-dimethoxy-5-(β-thiosulfatoäthylsulfonyl)-benzol, 1-Amino-2-methyl-5-methoxy-4-(β-thiosulfatoäthylsulfonyl)-benzol, 2-Chlor--1-amino-5-(β-thiosulfatoäthylsulfonyl)-benzol, 4--Chlor-1-amino-2-methyl-3-(β-thiosulfatoäthylsulfonyl)-benzol, 5-Chlor-1-amino-2-methoxy-4-(β--thiosulfatoäthylsulfonyl)-benzol sowie die ihnen entsprechenden β-Phosphatoäthylsulfonyl-, β--Chloräthylsulfonyl- und β-Acetoxyäthylsulfonyl--Verbindungen.

Die Abscheidung und Isolierung der erfindungsgemäss hergestellten Verbindungen der allgemeinen Formel (1) aus der Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, mit nachfolgender Filtration oder durch Eindampfen der Reaktionslösung, beispielsweise durch Sprühtrocknung, wobei dieser Reaktionslösung eine Puffersubstanz zugefügt werden kann. Die erfindungsgemässen Verbindungen der Formel (1) können auch direkt in Form der anfallenden, gegebenenfalls konzentrierten Syntheselösungen, gegebenenfalls nach Zusatz einer Puffersubstanz, so beispielsweise als Färbepräparation, zur weiteren Verwendung gelangen.

Die erfindungsgemässen Verbindungen der allgemeinen Formel (1) zeichnen sich durch eine gute Löslichkeit in Wasser aus. Sie besitzen faserreaktive Eigenschaften und stellen wertvolle Farbstoffe dar. Sie eignen sich zum Färben oder Bedrucken von Materialien, insbesondere Fasermaterialien, aus natürlicher oder regenerierter Cellulose, wie Baumwolle, Leinen, Hanf, Jute, Viskosekunstseide, oder aus natürlichen, regenerierten oder synthetischen Polyamiden, wie Seide, Wolle, Polyamid-6, Polyamid-66, Polyamid-11, des weiteren von Fasermaterialien aus synthetischen Polyurethanen und von Leder. Insbesondere eignen sich die erfindungsgemässen Verbindungen der Formel (1) als faserreaktive Farbstoffe zum Färben oder Bedrucken von Cellulose oder cellulosehaltigen Fasermaterialien.

Gegenstand der vorliegenden Erfindung ist somit auch die Verwendung der erfindungsgemässen Verbindungen der Formel (1) zum Färben oder Bedrucken der obengenannten Fasermaterialien oder von Leder bzw. ein Verfahren zum Färben oder Bedrucken dieser Fasermaterialien oder von Leder, beispielsweise analog bekannten, in der Technik üblichen Färbe- oder Druck- und Fixierverfahren, bei welchem man eine Monoazoverbindung der allgemeinen Formel (1) in gelöster Form auf das genannte Substrat aufbringt und auf diesem, beispielsweise analog bekannten und in der Technik üblichen Verfahren, insbesondere solchen, die für faserreaktive Farbstoffe eingesetzt werden können, fixiert.

So erhält man mit ihnen auf Cellulosefasern beispielsweise nach den Ausziehverfahren unter Verwendung von säurebindenden Mitteln und gegebenenfalls neutralen Salzen, wie Natriumchlorid oder Natriumsulfat, Färbungen mit hoher Farbstärke und Farbausbeute. Ebenso werden nach den Klotzverfahren, insbesondere bereits nach dem Klotz-Kurzverweil-Verfahren, und nach den üblichen Druckverfahren auf Cellulosefasermaterialien farbstarke Färbungen und Drucke erhalten. Die Fixierung erfolgt in der Regel mit Hilfe alkalisch wirkender Mittel, wie beispielsweise unter Anwendung von Alkalihydroxiden, Alkalicarbonaten, Alkaliphosphaten oder Alkalisilikaten, wobei das Alkalimetall vorzugsweise Natrium oder Kalium ist.

Die Colorierung der carbonamidgruppenhaltigen Materialien erfolgt in der Regel im neutralen bis schwach sauren pH-Bereich nach den in der Technik üblichen Färbe- und Druckverfahren für natürliche und synthetische Polyamidfasermaterialien und Leder. Solche Färbe- und Fixierweisen sind in der Literatur zahlreich beschrieben.

Die wässrigen Klotzflotten und Färbeflotten der erfindungsgemässen Farbstoffe besitzen eine gute Stabilität. Die mit den Verbindungen der Formel (1) auf den genannten Materialien erhaltenen Färbungen und Drucke zeichnen sich in der Regel durch eine hohe Farbstärke und durch klaren Farbton aus; sie zeigen sehr gute Lichtechtheiten und gute bis sehr gute Nassechtheiten, wie beispielsweise gute bis sehr gute Waschechtheiten, Chlorbleichechtheiten, wie insbesondere eine sehr gute Chlorbadewasserechtheit, Walkechtheiten, Überfärbeechtheiten, Wasser-, Seewasser- und Schweissechtheiten. Insbesondere die sehr guten Chlor- und Nasslichtechtheiten sind für eine Reihe von erfindungsgemässen Farbstoffen hervorzuheben.

Von den erfindungsgemässen Verbindungen der allgemeinen Formel (1) sind diejenigen bevorzugt, in welchen der Formelrest Y für die Vinyl- oder die $\beta$-Thiosulfatoäthyl-Gruppe steht, des weiteren auch solche, die zwei oder drei Sulfo- und/oder Carboxygruppen im Molekül enthalten.

Weiterhin sind insbesondere diejenigen Verbindungen entsprechend der allgemeinen Formel (1) als bevorzugt zu nennen, in welchen D den Naphthylrest, insbesondere den Naphth-2-yl-Rest, bedeutet, der durch 1, 2 oder 3 Sulfogruppen substituiert ist, oder den Phenylrest darstellt, der durch 1 oder 2 Sulfo- und/oder Carboxygruppen substituiert ist und der weiterhin durch einen oder zwei Substituenten aus der Gruppe Chlor, Brom, Alkyl von 1 bis 4 C-Atomen, Alkoxy von 1 bis 4 C-Atomen und Nitro substituiert sein kann.

Weiterhin sind solche Verbindungen der allgemeinen Formel (1) bevorzugt, in welcher der Formelrest K den 1,4-Phenylenrest der Formel (3) mit $R_3$, $R_4$ und $R_5$ der obengenannten Bedeutungen darstellt.

Gemäss den obengenannten bevorzugten Gruppen der erfindungsgemässen Verbindungen der allgemeinen Formel (1) sind dementsprechend hiervon insbesondere diejenigen erfindungsgemässen Verbindungen hervorzuheben, die der allgemeinen Formel (9)

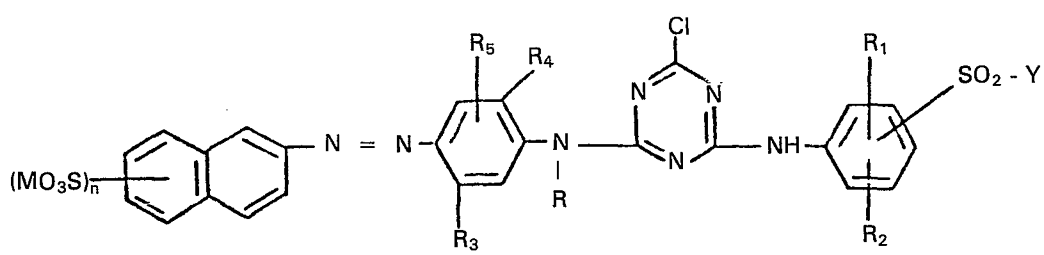

(9)

oder der allgemeinen Formel (10)

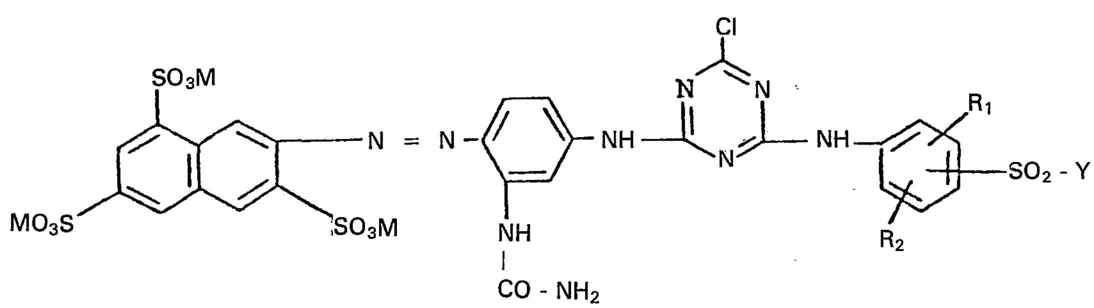

(10)

entsprechen, in welchen n für die Zahl 1, 2 oder 3, bevorzugt 2 oder 3, steht und R, $R_1$, $R_2$, $R_3$, $R_4$, $R_5$, M und Y die obengenannten Bedeutungen haben, wobei Y bevorzugt für die Vinylgruppe oder die $\beta$-Thiosulfatoäthyl-Gruppe steht. Hiervon sind wiederum diejenigen als bevorzugt zu nennen, in welchen R ein Wasserstoffatom ist und $R_3$ die Ureidogruppe darstellt.

Von den einzelnen erfindungsgemässen Verbindungen entsprechend der allgemeinen Formel (1) sind diejenigen als bevorzugt zu nennen, die in den Beispielen 1 bis 16 und 18 beschrieben sind.

Die nachstehenden Beispiele dienen zur Erläuterung der Erfindung. Die darin genannten Teile sind Gewichtsteile und die Prozentangaben stellen Gewichtsprozente dar, sofern nicht anders vermerkt. Gewichtsteile verhalten sich zu Volumenteilen wie Kilogramm zu Liter.

*Beispiel 1*

a) Eine Lösung von 60 Tl. 1-Amino-4-(β-thiosulfatoäthylsulfonyl)-benzol in 300 Teilen Wasser von einem pH-Wert von 6 bis 7 wird in eine Suspension von 38,6 Teilen Cyanurchlorid in 50 Teilen Wasser und 200 Teilen Eis einlaufen lassen. Durch Einstreuen von Natriumcarbonat hält man den pH-Wert zwischen 2 und 4 und rührt kräftig die Mischung bei 0 bis 10°C, bis das eingesetzte Amin zu über 99% umgesetzt ist.

b) 1200 Volumenteile einer wässrigen neutralen Lösung, die 108 Teile der Aminoazoverbindung der Formel

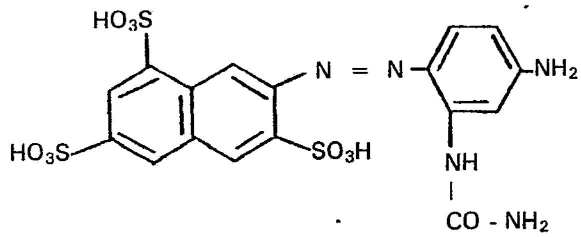

(hergestellt durch Kuppeln von diazotierter 2-Amino--naphthalin-3,6,8-trisulfonsäure auf 3-Aminophenyl-harnstoff) als Trinatriumsalz enthält, werden zu der gemäss der obigen Vorschrift a) hergestellten Suspension gegeben. Innerhalb von 2 Stunden steigert man die Temperatur auf 40 bis 45°C. Die Mischung wird etwa 10 Stunden bei 40 bis 45°C bis zur beendeten Reaktion gerührt, wobei man durch Einstreuen von Natriumbicarbonat den pH-Wert zwischen 5 und 6,5 hält.

Die so hergestellte Azoverbindung besitzt, in Form der freien Säure geschrieben, die Formel

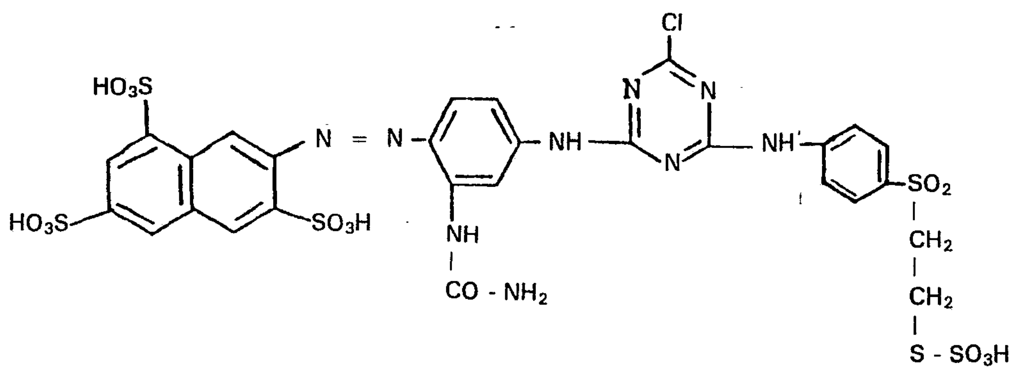

Sie kann aus der neutralen Lösung durch Eindampfen unter reduziertem Druck oder im Umluftschrank bei 60 bis 80°C oder durch Sprühtrocknen oder durch Aussalzen mit einem Elektrolytsalz, wie beispielsweise Kaliumchlorid, isoliert werden. Nach dem Trocknen erhält man ein orangefarbenes Pulver, das das Alkalimetallsalz, wie Kaliumsalz, dieser Verbindung zusammen mit dem Elektrolytsalz, wie beispielsweise Kaliumchlorid, enthält. Diese neue Verbindung liefert auf den in der Beschreibung genannten Materialien, wie insbesondere Cellulosefasermaterialien, wie beispielsweise Baumwolle, nach den in der Technik üblichen Applikations- und Fixiermethoden, insbesondere solcher für faserreaktive Farbstoffe, farbstarke, rotstichig gelbe Färbungen und Drucke von guten Licht- und Nassechtheitseigenschaften.

*Beispiel 2*

a) 1200 Volumenteile einer auf unter 10°C gekühlten wässrigen, neutralen Lösung mit 108 Teilen der in Beispiel 1 b) beschriebenen Aminoazoausgangsverbindung werden zu einer Suspension aus 38,6 Teilen Cyanurchlorid in 50 Teilen Wasser und 200 Teilen Eis einfliessen lassen. Die Mischung wird etwa 4 Stunden bei einer Temperatur von 0 bis 10°C kräftig gerührt und während dieser Zeit der pH durch Einstreuen von Natriumbicarbonat auf einen Wert zwischen 3,5 und 4,5 gehalten, bis die Acylierung der Aminoazoverbindung beendet ist.

b) 400 Volumenteile einer wässrigen neutralen Lösung von 62 Tl. 1-Amino-4-(β-thiosulfatoäthylsulfonyl)-benzol werden in die nach der Vorschrift a) erhaltene Reaktionsmischung einfliessen lassen. Die Temperatur wird innerhalb von 2 Stunden auf 40 bis 45°C gesteigert, und man rührt die Mischung noch etwa 12 Stunden bei 40 bis 50°C, bis die Reaktion beendet ist; mittels Natriumbicarbonat hält man den pH auf einen Wert zwischen 4,5 und 6,5.

Die so hergestellte Azoverbindung ist identisch mit der im Beispiel 1 b) hergestellten erfindungsgemässen Azoverbindung entsprechend der allgemeinen Formel (1). Sie wird in der dort angegebenen Weise isoliert und zeigt dieselben guten färberischen Eigenschaften und guten Echtheiten wie die nach Beispiel 1 hergestellte erfindungsgemässe Azoverbindung.

*Beispiel 3*

Man verfährt in der in Beispiel 2 angegebenen Verfahrensweise, ersetzt jedoch die im Abschnitt 2 b) verwendete wässrige Lösung des 1-Amino-4-(β-

-thiosulfatoäthylsulfonyl)-benzols durch eine Lösung von 39 Teilen 1-Amino-4-vinyl-sulfonylbenzol in 200 Volumenteilen Aceton.

Nach Aufarbeitung der Syntheselösung erhält man das elektrolythaltige Alkalimetallsalz, wie beispielsweise Natriumsalz, der Verbindung der Formel

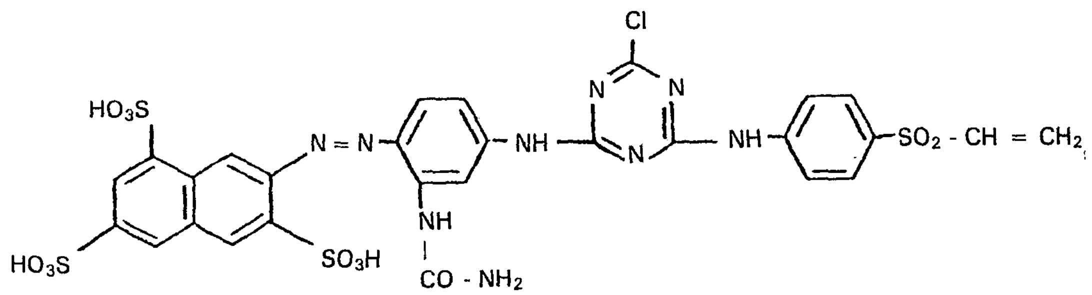

das sehr gute Farbstoffeigenschaften besitzt und nach den in der Technik für faserreaktive Farbstoffe üblichen Applikations- und Fixiermethoden beispielsweise auf Baumwolle kräftige rotstichig gelbe Färbungen und Drucke von guten Licht- und Nassechtheitseigenschaften liefert, von denen insbesondere die sehr guten Chlor- und Nasslichtechtheitseigenschaften hervorgehoben werden können.

*Beispiel 4*

Man verfährt in der im Beispiel 2 angegebenen Verfahrensweise, ersetzt jedoch die wässrige Lösung des 1-Amino-4-(β-thiosulfatoäthylsulfonyl)-benzols im Abschnitt 2 b) durch 46 Teile pulverförmiges 1-Amino-4-(β-chloräthylsulfonyl)-benzol.

Nach Aufarbeitung der Syntheselösung erhält man das elektrolythaltige Alkalimetallsalz der Verbindung der Formel

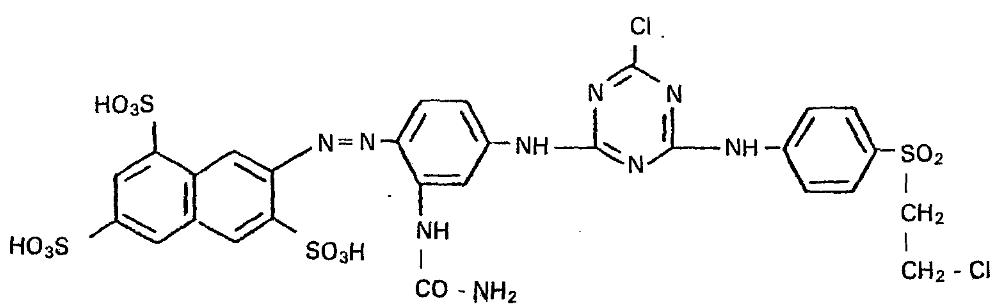

das sehr gute Farbstoffeigenschaften besitzt und beispielsweise Baumwolle nach den in der Technik für faserreaktive Farbstoffe üblichen Applikations- und Fixiermethoden in farbstarken, rotstichig gelben Tönen von guten Licht- und Nassechtheitseigenschaften färbt.

*Beispiel 5*

Man verfährt entweder nach der Verfahrensweise des Beispieles 1 oder der Verfahrensweise des Beispieles 2, jedoch mit der Abänderung, dass man jeweils anstelle der dort als Ausgangsverbindung verwendeten Aminoazoverbindung 74 Teile der Verbindung der Formel

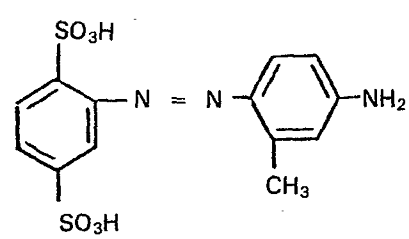

einsetzt. Nach der Aufarbeitung der Syntheselösung erhält man das elektrolythaltige Alkalimetallsalz der Verbindung der Formel

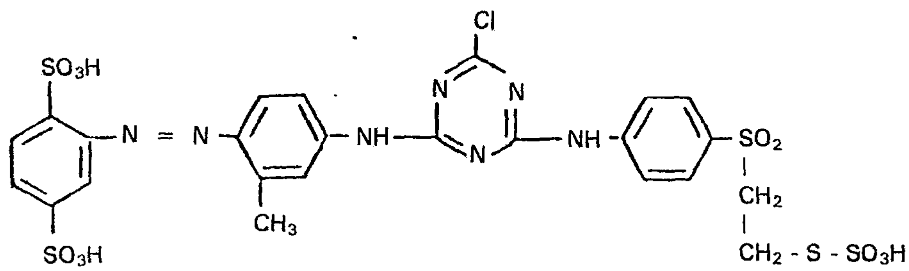

die sehr gute Farbstoffeigenschaften zeigt. Nach den in der Technik üblichen Applikations- und Fixiermethoden für faserreaktive Farbstoffe, beispielsweise nach einer der in den nachfolgenden Anwendungsbeispielen beschriebenen Verfahrensvarianten, erhält man mit diesem erfindungsgemässen Farbstoff beispielsweise auf Baumwolle farbstarke, rotstichig gelbe Färbungen und Drucke von sehr guten Licht- und Nassechtheitseigenschaften.

*Beispiel 6*

a) 1200 Volumenteile einer auf unter 10°C gekühlten wässrigen, neutralen Lösung mit 74 Teilen der in Beispiel 5 beschriebenen Aminoazoausgangsverbindung werden zu einer Suspension aus 38,6 Teilen Cyanurchlorid in 50 Teilen Wasser und 200 Teilen Eis einfliessen lassen. Die Mischung wird etwa 4 Stunden bei einer Temperatur von 0 bis 10°C kräftig gerührt und während dieser Zeit der pH durch Einstreuen von Natriumbicarbonat auf einem Wert zwischen 3,5 und 4,5 gehalten, bis die Acylierung der Aminoazoverbindung beendet ist.

b) 40 Teile 1-Amino-4-vinylsulfonyl-benzol werden der nach a) erhaltenen Reaktionsmischung zugesetzt. Die Temperatur wird innerhalb von 2 Stunden auf 40 bis 45°C gesteigert, und man rührt die Mischung noch etwa 12 Stunden bei 40 bis 50°C, bis die Reaktion beendet ist, wobei mittels Natriumbicarbonat der pH-Wert zwischen 4,5 und 6,5 gehalten wird. Die so hergestellte Azoverbindung besitzt, in Form der freien Säure geschrieben, die Formel

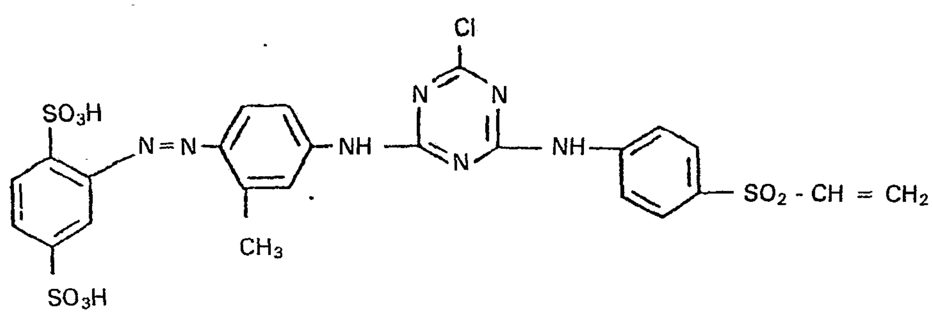

Sie kann aus der neutralen Lösung durch Eindampfen unter reduziertem Druck oder im Umluftschrank bei 60 bis 80°C oder durch Sprühtrocknen oder durch Aussalzen mit einem Elektrolytsalz, wie beispielsweise Kaliumchlorid, isoliert werden. Der Farbstoff liefert auf den in der Beschreibung genannten Materialien, wie insbesondere Cellulosefasermaterialien, wie beispielsweise Baumwolle, nach den in der Technik üblichen Applikations- und Fixiermethoden, insbesondere solcher für faserreaktive Farbstoffe, farbstarke, rotstichig gelbe Färbungen und Drucke von guten Licht- und Nassechtheitseigenschaften.

*Beispiele 7 bis 516*

In den nachfolgenden Tabellenbeispielen sind weitere erfindungsgemässe Monoazoverbindungen entsprechend der allgemeinen Formel (1) mit Hilfe ihrer Komponenten, aus denen sie zusammen mit dem Rest des Cyanurchlorids aufgebaut sind, beschrieben. Sie lassen sich aus diesen Aminoverbindungen und Cyanurchlorid in erfindungsgemässer Weise, wie beispielsweise nach einer in den obigen Beispielen 1 bis 5 beschriebenen Verfahrensvarianten, herstellen. Sie zeigen sehr gute Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel angegebenen Farbton.

In Diesen Tabellenbeispielen haben die Formelglieder $Z_1$ bis $Z_5$ folgende Bedeutungen:

$Z_1$: $-SO_2-CH=CH_2$

$Z_2$: $-SO_2-CH_2-CH_2-S-SO_3H$

$Z_3$: $-SO_2-CH_2-CH_2-Cl$

$Z_4$: $-SO_2-CH_2-CH_2-OPO_3H_2$

$Z_5$: $-SO_2-CH_2-CH_2-O-CO-CH_3$.

Die in den Tabellenbeispielen genannten Ausgangsverbindungen sind in Form ihrer freien Säuren angegeben.

| Bsp. | Amin der Formel (6) | Amin der Formel D-$NH_2$ | Verbindung der Formel H - K - NHR | Farbton auf Baumwolle |
|---|---|---|---|---|
| 7 | 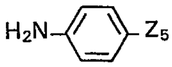 | 2-Aminonaphthalin--3,6,8-trisulfonsäure | 3-Aminophenyl--harnstoff | rotstichig gelb |
| 8 | 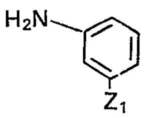 | dito | dito | dito |
| 9 | 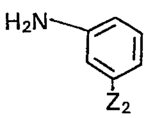 | dito | dito | dito |
| 10 | 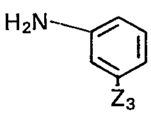 | dito | dito | dito |
| 11 | 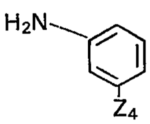 | dito | dito | dito |
| 12 | 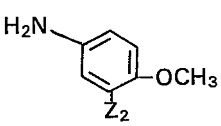 | dito | dito | dito |
| 13 | 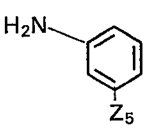 | dito | dito | dito |
| 14 | 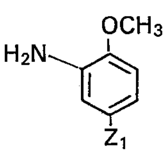 | dito | dito | dito |
| 15 | 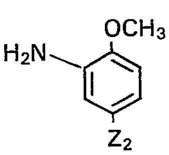 | dito | dito | dito |
| 16 | 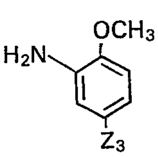 | dito | dito | dito |
| 17 | 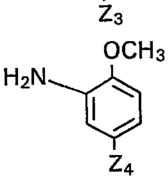 | dito | dito | dito |

| Bsp. | Amin der Formel (6) | Amin der Formel D-$NH_2$ | Verbindung der Formel H - K - NHR | Farbton auf Baumwolle |
|---|---|---|---|---|
| 18 | 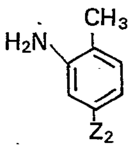 | 2-Aminonaphthalin--3,6,8-trisulfonsäure | 3-Aminophenyl--harnstoff | rotstichig gelb |
| 19 | 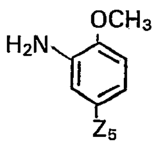 | dito | dito | dito |
| 20 | 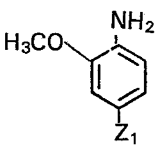 | dito | dito | dito |
| 21 | 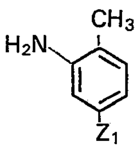 | dito | dito | dito |
| 22 | 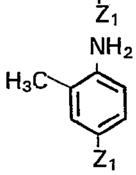 | dito | dito | dito |
| 23 | 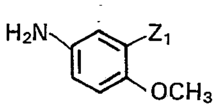 | dito | dito | dito |
| 24 | 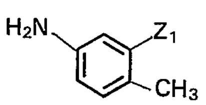 | dito | dito | dito |
| 25 | 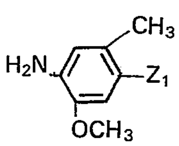 | dito | dito | dito |
| 26 | 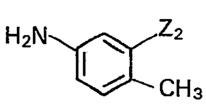 | dito | dito | dito |
| 27 | 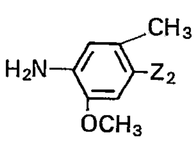 | dito | dito | dito |
| 28 | 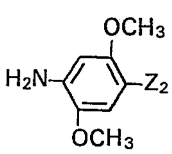 | dito | dito | dito |

| Bsp. | Amin der Formel (6) | Amin der Formel D-$NH_2$ | Verbindung der Formel H - K - NHR | Farbton auf Baumwolle |
|---|---|---|---|---|
| 29 | 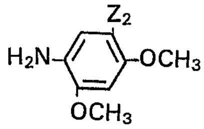 | 2-Aminonaphthalin--3,6,8-trisulfonsäure | 3-Aminophenyl--harnstoff | rotstichig gelb |
| 30 | 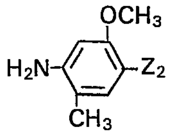 | dito | dito | dito |
| 31 | 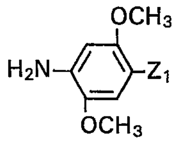 | dito | dito | dito |
| 32 | 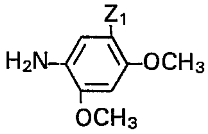 | dito | dito | dito |
| 33 | 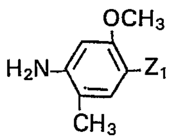 | dito | dito | dito |
| 34 | 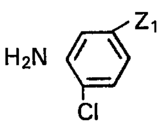 | dito | dito | dito |
| 35 | 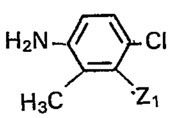 | dito | dito | dito |
| 36 | 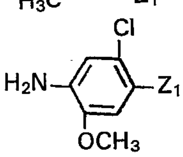 | dito | dito | dito |
| 37 | 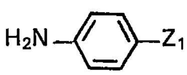 | 2-Aminonaphthalin--4,6,8-trisulfonsäure | dito | dito |
| 38 | 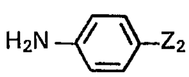 | dito | dito | dito |
| 39 | 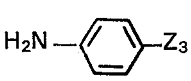 | dito | dito | dito |
| 40 | 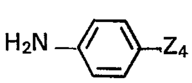 | dito | dito | dito |
| 41 | 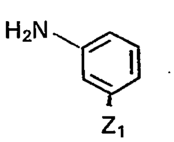 | dito | dito | dito |

| Bsp. | Amin der Formel (6) | Amin der Formel D-$NH_2$ | Verbindung der Formel H - K - NHR | Farbton auf Baumwolle |
|---|---|---|---|---|
| 42 | 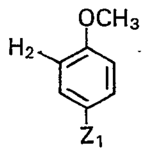 | 2-Aminonaphthalin--4,6,8-trisulfonsäure | 3-Aminophenyl--harnstoff | rotstichig gelb |
| 43 | 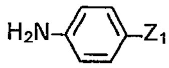 | 2-Aminonaphthalin--3,6,8-trisulfonsäure | N'-Phenyl-N-(3-amino--phenyl)-harnstoff | dito |
| 44 | dito | dito | 1-Amino-3-acetyl--amino-benzol | dito |
| 45 | dito | dito | 1-Amino-3-methyl--benzol | dito |
| 46 | dito | dito | 1-Amino-2,3-di-methylbenzol | dito |
| 47 | dito | dito | 1-Amino-3-benzoyl--amino-benzol | dito |
| 48 | dito | dito | 1-Amino-3-hydroxy-acetyl-amino-benzol | dito |
| 49 | dito | dito | 1-Amino-3-methyl--sulfonylamino-benzol | dito |
| 50 | dito | dito | 1-Amino-2,5-di-methoxy-benzol | sehr rotstichig gelb |
| 51 | dito | dito | 1-Amino-5-methyl-2--methoxy-benzol | dito |
| 52 | dito | dito | 1-Amino-2-methyl--benzol | rotstichig gelb |
| 53 | dito | dito | 1-Amino-2,5-di-methyl-benzol | sehr rotstichig gelb |
| 54 | dito | dito | 1-Amino-2-methoxy--benzol | dito |
| 55 | dito | dito | 1-Amino-3-methoxy--benzol | rotstichig gelb |
| 56 | dito | dito | Anilin | dito |
| 57 | dito | dito | 1-Amino-3-acetyl--amino-6-methoxy--benzol | sehr rotstichig gelb |
| 58 | dito | dito | 1-Amino-3-acetyl--amino-6-methyl--benzol | rotstichig gelb |
| 59 | dito | dito | N-Methylanilin | dito |
| 60 | dito | dito | N-Äthylanilin | dito |

| Bsp. | Amin der Formel (6) | Amin der Formel D-$NH_2$ | Verbindung der Formel H - K - NHR | Farbton auf Baumwolle |
|---|---|---|---|---|
| 61 | 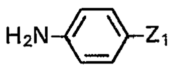 | 2-Aminonaphthalin--3,6,8-trisulfonsäure | N-Butylanilin | rotstichig gelb |
| 62 | dito | dito | N-(β-Hydroxyäthyl)--anilin | dito |
| 63 | dito | dito | N-(β-Sulfatoäthyl)--anilin | rotstichig gelb |
| 64 | dito | dito | 1-(N-Äthylamino)-3--methylbenzol | dito |
| 65 | dito | dito | 1-(N-Äthylamino)-3--methoxybenzol | dito |
| 66 | dito | dito | 1-Aminonaphthalin--7-sulfonsäure | dito |
| 67 | dito | dito | 1-Aminonaphthalin--6-sulfonsäure | dito |
| 68 | dito | dito | 1-Aminonaphthalin--8-sulfonsäure | stark rotstichig gelb |
| 69 | dito | dito | 1-Amino-2-methoxy--naphthalin-6-sulfon-säure | gelbstichig orange |
| 70 | dito | dito | 1-Amino-3-propionyl--amino-benzol | rotstichig gelb |
| 71 | 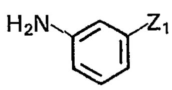 | dito | N'-Phenyl-N-(3-amino-phenyl)-harnstoff | dito |
| 72 | dito | dito | 1-Amino-3-acetyl--amino-benzol | dito |
| 73 | dito | dito | 1-Amino-3-methyl--benzol | dito |
| 74 | dito | dito | 1-Amino-2,3-di-methylbenzol | dito |
| 75 | dito | dito | 1-Amino-3-benzoyl--amino-benzol | dito |
| 76 | dito | dito | 1-Amino-3-hydroxy--acetylamino-benzol | dito |
| 77 | dito | dito | 1-Amino-3-methyl--sulfonylamino-benzol | dito |
| 78 | dito | dito | 1-Amino-2,5-di-methoxybenzol | gelbstichig orange |
| 79 | dito | dito | 1-Amino-5-methyl--2-methoxy-benzol | sehr rotstichig gelb |

| Bsp. | Amin der Formel (6) | Amin der Formel D-$NH_2$ | Verbindung der Formel H - K - NHR | Farbton auf Baumwolle |
|---|---|---|---|---|
| 80 | 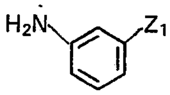 | 2-Aminonaphthalin--3,6,8-trisulfonsäure | 1-Amino-2-methyl--benzol | rotstichig gelb |
| 81 | dito | dito | 1-Amino-2,5-di-methyl-benzol | dito |
| 82 | dito | dito | 1-Amino-2-methoxy--benzol | sehr rotstichig gelb |
| 83 | dito | dito | 1-Amino-3-methoxy--benzol | rotstichig gelb |
| 84 | dito | dito | 1-Amino-3-acetyl--amino-6-methoxy--benzol | sehr rotstichig gelb |
| 85 | dito | dito | 1-Amino-3-acetyl--amino-6-methyl--benzol | rotstichig gelb |
| 86 | dito | dito | N-Methylanilin | dito |
| 87 | dito | dito | N-Äthylanilin | dito |
| 88 | dito | dito | N-Butylanilin | dito |
| 89 | dito | dito | N-(β-Hydroxy-äthyl)--anilin | dito |
| 90 | dito | dito | N-(β-Sulfato-äthyl)--anilin | dito |
| 91 | dito | dito | 1-(N-Äthylamino)-3--methyl-benzol | dito |
| 92 | dito | dito | 1-(N-Äthylamino)-3--methoxy-benzol | dito |
| 93 | dito | dito | 1-Aminonaphthalin--7-sulfonsäure | dito |
| 94 | dito | dito | 1-Aminonaphthalin--6-sulfonsäure | dito |
| 95 | dito | dito | Anilin | dito |
| 96 | dito | dito | 1-Aminonaphthalin--8-sulfonsäure | sehr rotstichig gelb |
| 97 | dito | dito | 1-Amino-2-methoxy--naphthalin-6-sulfon-säure | gelbstichig orange |
| 98 | dito | dito | 1-Amino-2-äthoxy--naphthalin-6-sulfon-säure | dito |

| Bsp. | Amin der Formel (6) | Amin der Formel D-$NH_2$ | Verbindung der Formel H - K - NHR | Farbton auf Baumwolle |
|---|---|---|---|---|
| 99 | 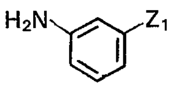 | 2-Aminonaphthalin--3,6,8-trisulfonsäure | 1-Amino-3-propionyl--amino-benzol | rotstichig gelb |
| 100 | 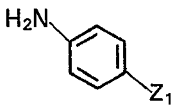 | 2-Aminonaphthalin--4,6,8-trisulfonsäure | N'-Phenyl-N-(3-amino--phenyl)-harnstoff | dito |
| 101 | dito | dito | 1-Amino-3-acetyl--amino-benzol | dito |
| 102 | dito | dito | 1-Amino-3-methyl--benzol | dito |
| 103 | dito | dito | 1-Amino-2,3-di-methyl-benzol | dito |
| 104 | dito | dito | 1-Amino-3-benzoyl--amino-benzol | dito |
| 105 | dito | dito | 1-Amino-3-hydroxy--acetylamino-benzol | dito |
| 106 | dito | dito | 1-Amino-3-methyl--sulfoylamino-benzol | dito |
| 107 | dito | dito | 1-Amino-2,5-di-methoxy-benzol | gelbstichig orange |
| 108 | dito | dito | 1-Amino-5-methyl--2-methoxy-benzol | sehr rotstichig gelb |
| 109 | dito | dito | 1-Amino-2-methyl--benzol | rotstichig gelb |
| 110 | dito | dito | 1-Amino-2,5-di-methyl-benzol | dito |
| 111 | dito | dito | 1-Amino-2-methoxy--benzol | sehr rotstichig gelb |
| 112 | dito | dito | 1-Amino-3-methoxy--benzol | rotstichig gelb |
| 113 | dito | dito | Anilin | dito |
| 114 | dito | dito | 1-Amino-3-acetyl--amino-6-methoxy--benzol | sehr rotstichig gelb |
| 115 | dito | dito | 1-Amino-3-acetyl--amino-6-methyl--benzol | rotstichig gelb |
| 116 | dito | dito | N-Methylanilin | dito |
| 117 | dito | dito | N-Äthylanilin | dito |
| 118 | dito | dito | N-Butylanilin | dito |

| Bsp. | Amin der Formel (6) | Amin der Formel D-$NH_2$ | Verbindung der Formel H - K - NHR | Farbton auf Baumwolle |
|---|---|---|---|---|
| 119 | 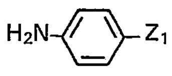 | 2-Aminonaphthalin--4,6,8-trisulfonsäure | N-(β-Hydroxyäthyl)--anilin | rotstichig gelb |
| 120 | dito | dito | N-(β-Sulfatoäthyl)--anilin | rotstichig gelb |
| 121 | dito | dito | 1-(N-Äthylamino)-3--methyl-benzol | dito |
| 122 | dito | dito | 1-(N-Äthylamino)-3--methoxy-benzol | dito |
| 123 | dito | dito | 1-Aminonaphthalin--7-sulfonsäure | dito |
| 124 | dito | dito | 1-Aminonaphthalin--6-sulfonsäure | dito |
| 125 | dito | dito | 1-Amino-2-äthoxy--naphthalin-6-sulfonsäure | gelbstichig orange |
| 126 | dito | dito | 1-Aminonaphthalin--8-sulfonsäure | stark rotstichig gelb |
| 127 | dito | dito | 1-Amino-2-methoxy--naphthalin-6-sulfonsäure | gelbstichig orange |
| 128 | dito | dito | 1-Amino-3-propionyl--amino-benzol | rotstichig gelb |
| 129 | 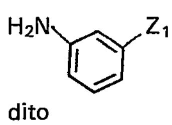 | dito | N'-Phenyl-N-(3-amino--phenyl)-harnstoff | dito |
| 130 | dito | dito | 1-Amino-3-acetyl--amino-benzol | dito |
| 131 | dito | dito | 1-Amino-3-methyl--benzol | dito |
| 132 | dito | dito | 1-Amino-2,3-dimethyl-benzol | dito |
| 133 | dito | dito | 1-Amino-3-benzoyl--amino-benzol | dito |
| 134 | dito | dito | 1-Amino-3-hydroxy--acetylamino-benzol | dito |
| 135 | dito | dito | Anilin | dito |
| 136 | dito | dito | 1-Amino-3-methylsulfonylamino-benzol | dito |
| 137 | dito | dito | 1-Amino-2,5-dimethoxy-benzol | gelbstichig orange |

| Bsp. | Amin der Formel (6) | Amin der Formel D-$NH_2$ | Verbindung der Formel H - K - NHR | Farbton auf Baumwolle |
|---|---|---|---|---|
| 138 | 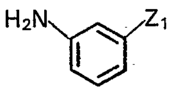 | 2-Aminonaphthalin--4,6,8-trisulfonsäure | 1-Amino-5-methyl--2-methoxy-benzol | sehr rotstichig gelb |
| 139 | dito | dito | 1-Amino-2-methyl--benzol | rotstichig gelb |
| 140 | dito | dito | 1-Amino-2,5-di-methyl-benzol | dito |
| 141 | dito | dito | 1-Amino-2-methoxy--benzol | sehr rotstichig gelb |
| 142 | dito | dito | 1-Amino-3-methoxy--benzol | rotstichig gelb |
| 143 | dito | dito | 1-Amino-3-acetyl--amino-6-methoxy--benzol | sehr rotstichig gelb |
| 144 | dito | dito | 1-Amino-3-acetyl--amino-6-methyl--benzol | rotstichig gelb |
| 145 | dito | dito | N-Methylanilin | rotstichig, gelb |
| 146 | dito | dito | N-Äthylanilin | dito |
| 147 | dito | dito | N-Butylanilin | dito |
| 148 | dito | dito | N-(β-Hydroxyäthyl)--anilin | dito |
| 149 | dito | dito | N-(β-Sulfatoäthyl)--anilin | dito |
| 150 | dito | dito | 1-(N-Äthylamino)-3--methyl-benzol | dito |
| 151 | dito | dito | 1-(N-Äthylamino)-3--methoxy-benzol | dito |
| 152 | dito | dito | 1-Aminonaphthalin--7-sulfonsäure | dito |
| 153 | dito | dito | 1-Aminonaphthalin--6-sulfonsäure | dito |
| 154 | dito | dito | 1-Aminonaphthalin--8-sulfonsäure | stark rotstichig gelb |
| 155 | dito | dito | 1-Amino-2-methoxy--naphthalin-6-sulfon-säure | gelbstichig orange |
| 156 | dito | dito | 1-Amino-3-propionyl--amino-benzol | rotstichig gelb |

| Bsp. | Amin der Formel (6) | Amin der Formel D-$NH_2$ | Verbindung der Formel H - K - NHR | Farbton auf Baumwolle |
|---|---|---|---|---|
| 157 | 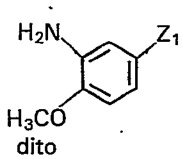 | 2-Aminonaphthalin--4,6,8-trisulfonsäure | N'-Phenyl-N-(3-amino--phenyl)-harnstoff | rotstichig gelb |
| 158 | dito | dito | 1-Amino-3-acetyl-amino-benzol | dito |
| 159 | dito | dito | 1-Amino-3-methyl--benzol | dito |
| 160 | dito | dito | 1-Amino-2,3-di-methyl-benzol | dito |
| 161 | dito | dito | 1-Amino-3-benzoyl--amino-benzol | dito |
| 162 | dito | dito | 1-Amino-3-hydroxy--acetylamino-benzol | dito |
| 163 | dito | dito | 1-Amino-3-methyl--sulfonylamino-benzol | dito |
| 164 | dito | dito | 1-Amino-2,5-di-methoxy-benzol | gelbstichig orange |
| 165 | dito | dito | 1-Amino-5-methyl--2-methoxy-benzol | sehr rotstichig gelb |
| 166 | dito | dito | 1-Amino-2-methyl--benzol | rotstichig gelb |
| 167 | dito | dito | 1-Amino-2,5-di-methyl-benzol | dito |
| 168 | dito | dito | 1-Amino-2-methoxy--benzol | sehr rotstichig gelb |
| 169 | dito | dito | 1-Amino-3-methoxy--benzol | rotstichig gelb |
| 170 | dito | dito | 1-Amino-3-acetyl--amino-6-methoxy--benzol | sehr rotstichig gelb |
| 171 | dito | dito | 1-Amino-3-acetyl--amino-6-methyl--benzol | rotstichig gelb |
| 172 | dito | dito | Anilin | dito |
| 173 | dito | dito | N-Methylanilin | dito |
| 174 | dito | dito | N-Äthylanilin | dito |
| 175 | dito | dito | N-Butylanilin | dito |
| 176 | dito | dito | N-(β-Hydroxyäthyl)--anilin | dito |

| Bsp. | Amin der Formel (6) | Amin der Formel D-$NH_2$ | Verbindung der Formel H - K - NHR | Farbton auf Baumwolle |
|---|---|---|---|---|
| 177 | 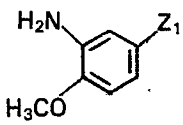 | 2-Aminonaphthalin--4,6,8-trisulfonsäure | N-(β-Sulfatoäthyl)--anilin | rotstichig gelb |
| 178 | dito | dito | 1-(N-Äthylamino)-3--methyl-benzol | dito |
| 179 | dito | dito | 1-(N-Äthylamino)-3--methoxy-benzol | dito |
| 180 | dito | dito | 1-Aminonaphthalin--7-sulfonsäure | dito |
| 181 | dito | dito | 1-Aminonaphthalin--6-sulfonsäure | dito |
| 182 | dito | dito | 1-Aminonaphthalin--8-sulfonsäure | stark rotstichig gelb |
| 183 | dito | dito | 1-Amino-2-methoxy--naphthalin-6-sulfon-säure | gelbstichig orange |
| 184 | dito | dito | 1-Amino-3-propionyl--amino-benzol | rotstichig gelb |
| 185 | 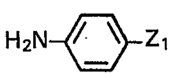 | 1-Aminonaphthalin--2,4,7-trisulfonsäure | 3-Aminophenyl--harnstoff | dito |
| 186 | dito | dito | 1-Amino-3-methyl--benzol | dito |
| 187 | dito | dito | 1-Aminonaphthalin--6-sulfonsäure | dito |
| 188 | dito | 1-Aminonaphthalin--3,6,8-trisulfonsäure | 1-Amino-3-methyl--benzol | dito |
| 189 | dito | 1-Aminonaphthalin--4,6,8-trisulfonsäure | dito | dito |
| 190 | dito | 2-Aminonaphthalin--1,5,7-trisulfonsäure | 3-Aminophenyl--harnstoff | dito |
| 191 | dito | dito | 1-Amino-3-methyl--benzol | dito |
| 192 | dito | dito | 1-Amino-3-acetyl--amino-benzol | dito |
| 193 | dito | 2-Aminonaphthalin--4,8-disulfonsäure | 3-Aminophenyl--harnstoff | dito |
| 194 | dito | dito | 1-Amino-3-methyl--benzol | dito |
| 195 | dito | dito | 1-Amino-2,3-di-methyl-benzol | dito |

| Bsp. | Amin der Formel (6) | Amin der Formel D-$NH_2$ | Verbindung der Formel H - K - NHR | Farbton auf Baumwolle |
|---|---|---|---|---|
| 196 | 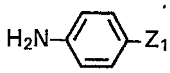 | 2-Aminonaphthalin- -4,8-disulfonsäure | 1-N-(β-Hydroxyäthyl)- -amino-3-methyl- -benzol | rotstichig gelb |
| 197 | dito | dito | N-(β-Hydroxyäthyl)- -anilin | dito |
| 198 | dito | dito | N-(β-Sulfatoäthyl)- -anilin | dito |
| 199 | dito | dito | Anilin | dito |
| 200 | dito | dito | N-Methylanilin | dito |
| 201 | dito | dito | 1-Aminonaphthalin- -6-sulfonsäure | dito |
| 202 | dito | dito | 1-Aminonaphthalin- -7-sulfonsäure | dito |
| 203 | dito | dito | 1-Amino-2-methoxy- -naphthalin-6-sulfon- säure | sehr rotstichig gelb |
| 204 | dito | dito | 1-Amino-2-methoxy- -benzol | dito |
| 205 | dito | dito | 1-Amino-2,5-di- methoxy-benzol | dito |
| 206 | dito | dito | 1-Amino-3-acetyl- -amino-benzol | rotstichig gelb |
| 207 | dito | dito | 1-Amino-3-hydroxy- -acetylamino-benzol | dito |
| 208 | dito | 2-Aminonaphthalin- -1,5-disulfonsäure | 3-Amino-phenyl- -harnstoff | dito |
| 209 | dito | dito | 1-Amino-3-methyl- -benzol | dito |
| 210 | dito | dito | 1-Amino-5-methyl- -2-methoxy-benzol | sehr rotstichig gelb |
| 211 | dito | dito | 1-Amino-3-acetyl- -amino-benzol | rotstichig gelb |
| 212 | dito | dito | 1-Amino-3-hydroxy- -acetylamino-benzol | dito |
| 213 | dito | dito | N-(β-Hydroxyäthyl)- -anilin | dito |
| 214 | dito | dito | N-(β-Sulfatoäthyl)- -anilin | dito |

| Bsp. | Amin der Formel (6) | Amin der Formel D-$NH_2$ | Verbindung der Formel H - K - NHR | Farbton auf Baumwolle |
|---|---|---|---|---|
| 215 | 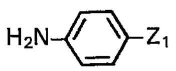 | 2-Aminonaphthalin--1,5-disulfonsäure | 1-Aminonaphthalin--6-sulfonsäure | rotstichig gelb |
| 216 | dito | 2-Aminonaphthalin--5,7-disulfonsäure | 1-Amino-3-methyl--benzol | dito |
| 217 | dito | dito | 3-Amino-phenyl--harnstoff | dito |
| 218 | dito | 2-Aminonaphthalin--3,6-disulfonsäure | 1-Amino-3-methyl--benzol | dito |
| 219 | dito | 2-Aminonaphthalin--6,8-disulfonsäure | 3-Amino-phenyl--harnstoff | dito |
| 220 | dito | dito | 1-Amino-3-methyl--benzol | dito |
| 221 | dito | dito | 1-Amino-3-acetyl--amino-benzol | dito |
| 222 | dito | dito | 1-Amino-3-hydroxy--acetylamino-benzol | dito |
| 223 | dito | dito | 1-Amino-2-methoxy--naphthalin-6-sulfon-säure | gelbstichig orange |
| 224 | dito | dito | 1-Aminonaphthalin--6-sulfonsäure | rotstichig gelb |
| 225 | dito | dito | 1-Amino-3-acetyl--aminobenzol-6--sulfonsäure | dito |
| 226 | dito | 2-Aminonaphthalin--4,8-disulfonsäure | dito | dito |
| 227 | dito | 2-Aminonaphthalin--1,5-disulfonsäure | dito | dito |
| 228 | dito | 2-Aminonaphthalin--3,6,8-trisulfonsäure | dito | dito |
| 229 | dito | 2-Aminonaphthalin--4,6,8-trisulfonsäure | dito | dito |
| 230 | dito | 2-Aminonaphthalin--5-sulfonsäure | 1-Amino-3-acetyl--aminobenzol-6--sulfonsäure | dito |
| 231 | dito | 2-Aminonaphthalin--8-sulfonsäure | dito | dito |
| 232 | dito | 2-Aminonaphthalin--6-sulfonsäure | dito | dito |

| Bsp. | Amin der Formel (6) | Amin der Formel D-NH$_2$ | Verbindung der Formel H - K - NHR | Farbton auf Baumwolle |
|---|---|---|---|---|
| 233 | 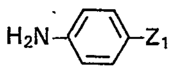 | 1-Aminonaphthalin--4-sulfonsäure | 1-Amino-3-acetyl--aminobenzol-6--sulfonsäure | rotstichig gelb |
| 234 | dito | 1-Aminonaphthalin--4,8-disulfonsäure | dito | dito |
| 235 | dito | dito | 1-Amino-3-phenyl--ureido-benzol-6--sulfonsäure | dito |
| 236 | dito | 1-Aminonaphthalin--4-sulfonsäure | 1-Amino-3-phenyl--ureido-benzol-6--sulfonsäure | dito |
| 237 | dito | 2-Aminonaphthalin--6-sulfonsäure | dito | dito |
| 238 | dito | 2-Aminonaphthalin--5-sulfonsäure | dito | dito |
| 239 | dito | 2-Aminonaphthalin--4,6,8-trisulfonsäure | dito | dito |
| 240 | dito | 2-Aminonaphthalin--3,6,8-trisulfonsäure | dito | dito |
| 241 | dito | 1-Aminonaphthalin--3,6,8-trisulfonsäure | dito | dito |
| 242 | dito | 1-Aminonaphthalin--4,6,8-trisulfonsäure | dito | dito |
| 243 | dito | 2-Aminonaphthalin--4,8-disulfonsäure | dito | dito |
| 244 | dito | 2-Aminonaphthalin--1,5-disulfonsäure | dito | dito |
| 245 | dito | 2-Aminonaphthalin--6,8-disulfonsäure | dito | dito |
| 246 | dito | 1-Aminobenzol-2--sulfonsäure | dito | dito |
| 247 | dito | 1-Aminobenzol-3--sulfonsäure | dito | dito |
| 248 | dito | 1-Aminobenzol-4--sulfonsäure | dito | dito |
| 249 | dito | 1-Amino-4-methyl--benzol-2-sulfonsäure | dito | dito |
| 250 | dito | 6-Chlor-3-amino--toluol-4-sulfonsäure | dito | dito |

| Bsp. | Amin der Formel (6) | Amin der Formel D-$NH_2$ | Verbindung der Formel H - K - NHR | Farbton auf Baumwolle |
|---|---|---|---|---|
| 251 | 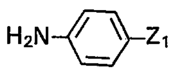 | 4-Aminoanisol-3--sulfonsäure | 1-Amino-3-phenyl--ureido-benzol-6--sulfonsäure | rotstichig gelb |
| 252 | dito | 2-Amino-5-sulfo--benzoesäure | dito | dito |
| 253 | dito | 1-Aminobenzol-2,5--disulfonsäure | dito | dito |
| 254 | dito | 1-Aminobenzol-2,4--disulfonsäure | dito | dito |
| 255 | dito | 1-Aminobenzol-2,5--disulfonsäure | N-(β-Sulfatoäthyl)--anilin | dito |
| 256 | dito | 1-Aminobenzol-4--sulfonsäure | dito | dito |
| 257 | dito | 1-Aminobenzol-2--sulfonsäure | dito | dito |
| 258 | dito | 1-Aminobenzol-2,5--disulfonsäure | N-(β-Hydroxyäthyl)--anilin | dito |
| 259 | dito | 1-Aminobenzol-2,4--disulfonsäure | dito | dito |
| 260 | dito | 1-Aminobenzol-3,5--disulfonsäure | dito | dito |
| 261 | dito | 1-Aminobenzol-4--sulfonsäure | 1-Aminonaphthalin--6-sulfonsäure | dito |
| 262 | dito | 1-Aminobenzol-2,5--disulfonsäure | dito | dito |
| 263 | dito | dito | 1-Aminonaphthalin--7-sulfonsäure | dito |
| 264 | dito | 4-Nitro-4'-amino--stilben-2,2'-disulfon-säure | 1-Amino-3-methyl--benzol | dito |
| 265 | dito | dito | 3-Amino-phenyl--harnstoff | dito |
| 266 | dito | 2-(3'-Sulfo-4'-amino--phenyl)-6-methyl--benzthiazol-7-sulfon-säure | 1-Amino-3-methyl--benzol | dito |
| 267 | dito | dito | 3-Amino-phenyl--harnstoff | dito |
| 268 | dito | dito | N-(β-Sulfatoäthyl)--anilin | dito |

| Bsp. | Amin der Formel (6) | Amin der Formel D-$NH_2$ | Verbindung der Formel H - K - NHR | Farbton auf Baumwolle |
|---|---|---|---|---|
| 269 | 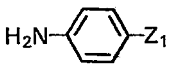 | 2-(3'-Sulfo-4'-amino--phenyl)-6-methyl--benzthiazol-7-sulfon-säure | 1-Aminonaphthalin--6-sulfonsäure | rotstichig gelb |
| 270 | 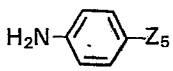 | 1-Aminobenzol-2,5--disulfonsäure | 1-Amino-3-methyl--benzol | dito |
| 271 | 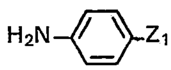 | dito | 3-Aminophenyl--harnstoff | dito |
| 272 | dito | dito | 1-Amino-3-acetyl--aminobenzol | dito |
| 273 | dito | dito | N'-Phenyl-N-(3-amino--phenyl)-harnstoff | dito |
| 274 | dito | dito | 1-Amino-3-benzoyl--amino-benzol | dito |
| 275 | dito | dito | 1-Amino-2-methoxy--5-methyl-benzol | dito |
| 276 | 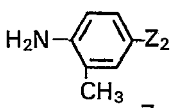 | 2-Aminonaphthalin--3,6,8-trisulfonsäure | 3-Amino-phenyl--harnstoff | dito |
| 277 | 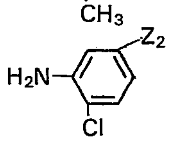 | dito | dito | dito |
| 278 | 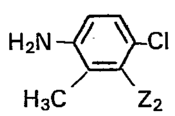 | dito | dito | dito |
| 279 | 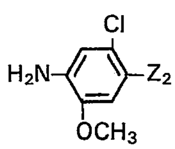 | dito | dito | dito |
| 280 | 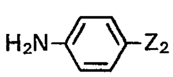 | 2-Aminonaphthalin--4,6,8-trisulfonsäure | dito | dito |
| 281 | 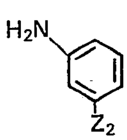 | dito | dito | dito |
| 282 | 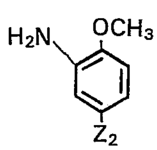 | dito | dito | dito |
| 283 | 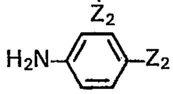 | 2-Aminonaphthalin--3,6,8-trisulfonsäure | N'-Phenyl-N-(3-amino--phenyl)-harnstoff | dito |

| Bsp. | Amin der Formel (6) | Amin der Formel D-$NH_2$ | Verbindung der Formel H - K - NHR | Farbton auf Baumwolle |
|---|---|---|---|---|
| 284 | 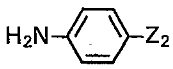 | 2-Aminonaphthalin--3,6,8-trisulfonsäure | 1-Amino-3-acetyl--amino-benzol | rotstichig gelb |
| 285 | dito | dito | 1-Amino-3-methyl--benzol | dito |
| 286 | dito | dito | 1-Amino-2,3-di-methylbenzol | dito |
| 287 | dito | dito | 1-Amino-3-benzoyl--amino-benzol | dito |
| 288 | dito | dito | 1-Amino-3-hydroxy-acetyl-amino-benzol | dito |
| 289 | dito | dito | 1-Amino-3-methyl--sulfonylamino-benzol | dito |
| 290 | dito | dito | 1-Amino-2,5-di-methoxy-benzol | sehr rotstichig gelb |
| 291 | dito | dito | 1-Amino-5-methyl--2-methoxy-benzol | dito |
| 292 | dito | dito | 1-Amino-2-methyl--benzol | rotstichig gelb |
| 293 | dito | dito | 1-Amino-2,5-di-methyl-benzol | sehr rotstichig gelb |
| 294 | dito | dito | 1-Amino-2-methoxy--benzol | dito |
| 295 | dito | dito | 1-Amino-3-methoxy--benzol | rotstichig gelb |
| 296 | dito | dito | Anilin | dito |
| 297 | dito | dito | 1-Amino-3-acetyl--amino-6-methoxy--benzol | sehr rotstichig gelb |
| 298 | dito | dito | 1-Amino-3-acetyl--amino-6-methyl--benzol | rotstichig gelb |
| 299 | dito | dito | N-Methylanilin | dito |
| 300 | dito | dito | N-Äthylanilin | dito |
| 301 | dito | dito | N-Butylanilin | dito |
| 302 | dito | dito | N-($\beta$-Hydroxyäthyl)--anilin | dito |
| 303 | dito | dito | N-($\beta$-Sulfatoäthyl)--anilin | rotstichig gelb |

| Bsp. | Amin der Formel (6) | Amin der Formel D-$NH_2$ | Verbindung der Formel H - K - NHR | Farbton auf Baumwolle |
|---|---|---|---|---|
| 304 | 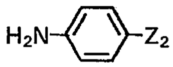 | 2-Aminonaphthalin--3,6,8-trisulfonsäure | 1-(N-Äthylamino)--3-methylbenzol | rotstichig gelb |
| 305 | dito | dito | 1-(N-Äthylamino)--3-methoxybenzol | dito |
| 306 | dito | dito | 1-Aminonaphthalin--7-sulfonsäure | dito |
| 307 | dito | dito | 1-Aminonaphthalin--6-sulfonsäure | dito |
| 308 | dito | dito | 1-Aminonaphthalin--8-sulfonsäure | stark rotstichig gelb |
| 309 | dito | dito | 1-Amino-2-methoxy--naphthalin-6-sulfon-säure | gelbstichig orange |
| 310 | dito | dito | 1-Amino-3-propionyl--amino-benzol | rotstichig gelb |
| 311 | 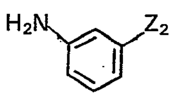 | dito | N'-Phenyl-N-(3-amino-phenyl)-harnstoff | dito |
| 312 | dito | dito | 1-Amino-3-acetyl--amino-benzol | dito |
| 313 | dito | dito | 1-Amino-3-methyl--benzol | dito |
| 314 | dito | dito | 1-Amino-2,3-di-methylbenzol | dito |
| 315 | dito | dito | 1-Amino-3-benzoyl--amino-benzol | dito |
| 316 | dito | dito | 1-Amino-3-hydroxy--acetylamino-benzol | dito |
| 317 | dito | dito | 1-Amino-3-methyl--sulfonylamino-benzol | dito |
| 318 | dito | dito | 1-Amino-2,5-di-methoxybenzol | gelbstichig orange |
| 319 | dito | dito | 1-Amino-5-methyl--2-methoxy-benzol | sehr rotstichig gelb |
| 320 | dito | dito | 1-Amino-2-methyl--benzol | rotstichig gelb |
| 321 | dito | dito | 1-Amino-2,5-di-methyl-benzol | dito |
| 322 | dito | dito | 1-Amino-2-methoxy--benzol | sehr rotstichig gelb |

| Bsp. | Amin der Formel (6) | Amin der Formel D-$NH_2$ | Verbindung der Formel H - K - NHR | Farbton auf Baumwolle |
|---|---|---|---|---|
| 323 | 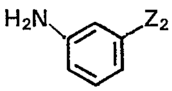 | 2-Aminonaphthalin--3,6,8-trisulfonsäure | 1-Amino-3-methoxy--benzol | rotstichig gelb |
| 324 | dito | dito | 1-Amino-3-acetyl--amino-6-methoxy--benzol | sehr rotstichig gelb |
| 325 | dito | dito | 1-Amino-3-acetyl--amino-6-methyl--benzol | rotstichig gelb |
| 326 | dito | dito | N-Methylanilin | dito |
| 327 | dito | dito | N-Äthylanilin | dito |
| 328 | dito | dito | N-Butylanilin | dito |
| 329 | dito | dito | N-($\beta$-Hydroxyäthyl)--anilin | dito |
| 330 | dito | dito | N-($\beta$-Sulfatoäthyl)--anilin | dito |
| 331 | dito | dito | 1-(N-Äthylamino)--3-methyl-benzol | dito |
| 332 | dito | dito | 1-(N-Äthylamino)--3-methoxy-benzol | dito |
| 333 | dito | dito | 1-Aminonaphthalin--7-sulfonsäure | dito |
| 334 | dito | dito | 1-Aminonaphthalin--6-sulfonsäure | dito |
| 335 | dito | dito | Anilin | dito |
| 336 | dito | dito | 1-Aminonaphthalin--8-sulfonsäure | sehr rotstichig gelb |
| 337 | dito | dito | 1-Amino-2-methoxy--naphthalin-6-sulfon-säure | gelbstichig orange |
| 338 | dito | dito | 1-Amino-2-äthoxy--naphthalin-6-sulfon-säure | dito |
| 339 | dito | dito | 1-Amino-3-propionyl--amino-benzol | rotstichig gelb |
| 340 | 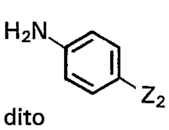 | 2-Aminonaphthalin--4,6,8-trisulfonsäure | N'-Phenyl-N-(3-amino--phenyl)-harnstoff | dito |
| 341 | dito | dito | 1-Amino-3-acetyl--amino-benzol | dito |

| Bsp. | Amin der Formel (6) | Amin der Formel D-$NH_2$ | Verbindung der Formel H - K - NHR | Farbton auf Baumwolle |
|---|---|---|---|---|
| 342 | 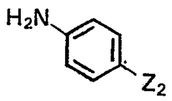 | 2-Aminonaphthalin--4,6,8-trisulfonsäure | 1-Amino-3-methyl--benzol | rotstichig gelb |
| 343 | dito | dito | 1-Amino-2,3-di-methyl-benzol | dito |
| 344 | dito | dito | 1-Amino-3-benzoyl--amino-benzol | dito |
| 345 | dito | dito | 1-Amino-3-hydroxy--acetylamino-benzol | dito |
| 346 | dito | dito | 1-Amino-3-methyl--sulfoylamino-benzol | dito |
| 347 | dito | dito | 1-Amino-2,5-di-methoxy-benzol | gelbstichig orange |
| 348 | dito | dito | 1-Amino-5-methyl--2-methoxy-benzol | sehr rotstichig gelb |
| 349 | dito | dito | 1-Amino-2-methyl--benzol | rotstichig gelb |
| 350 | dito | dito | 1-Amino-2,5-di-methyl-benzol | dito |
| 351 | dito | dito | 1-Amino-2-methoxy--benzol | sehr rotstichig gelb |
| 352 | dito | dito | 1-Amino-3-methoxy--benzol | rotstichig gelb |
| 353 | dito | dito | Anilin | dito |
| 354 | dito | dito | 1-Amino-3-acetyl--amino-6-methoxy--benzol | sehr rotstichig gelb |
| 355 | dito | dito | 1-Amino-3-acetyl--amino-6-methyl--benzol | rotstichig gelb |
| 356 | dito | dito | N-Methylanilin | dito |
| 357 | dito | dito | N-Äthylanilin | dito |
| 358 | dito | dito | N-Butylanilin | dito |
| 359 | 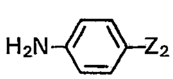 | dito | N-(β-Hydroxyäthyl)--anilin | dito |
| 360 | dito | dito | N-(β-Sulfatoäthyl)--anilin | rotstichig gelb |
| 361 | dito | dito | 1-(N-Äthylamino)--3-methyl-benzol | dito |

| Bsp. | Amin der Formel (6) | Amin der Formel D-$NH_2$ | Verbindung der Formel H - K - NHR | Farbton auf Baumwolle |
|---|---|---|---|---|
| 362 | 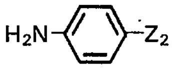 | 2-Aminonaphthalin--4,6,8-trisulfonsäure | 1-(N-Äthylamino)--3-methoxy-benzol | rotstichig gelb |
| 363 | dito | dito | 1-Aminonaphthalin--7-sulfonsäure | dito |
| 364 | dito | dito | 1-Aminonaphthalin--6-sulfonsäure | dito |
| 365 | dito | dito | 1-Amino-2-äthoxy--naphthalin-6-sulfonsäure | gelbstichig orange |
| 366 | dito | dito | 1-Aminonaphthalin--8-sulfonsäure | stark rotstichig gelb |
| 367 | dito | dito | 1-Amino-2-methoxy--naphthalin-6-sulfonsäure | gelbstichig orange |
| 368 | dito | dito | 1-Amino-3-propionyl--amino-benzol | rotstichig gelb |
| 369 | 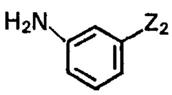 | dito | N'-Phenyl-N-(3-amino--phenyl)-harnstoff | dito |
| 370 | dito | dito | 1-Amino-3-acetyl--amino-benzol | dito |
| 371 | dito | dito | 1-Amino-3-methyl--benzol | dito |
| 372 | dito | dito | 1-Amino-2,3-dimethyl-benzol | dito |
| 373 | dito | dito | 1-Amino-3-benzoyl--amino-benzol | dito |
| 374 | dito | dito | 1-Amino-3-hydroxy--acetylamino-benzol | dito |
| 375 | dito | dito | Anilin | dito |
| 376 | dito | dito | 1-Amino-3-methylsulfonylamino-benzol | dito |
| 377 | dito | dito | 1-Amino-2,5-dimethoxy-benzol | gelbstichig orange |
| 378 | dito | dito | 1-Amino-5-methyl--2-methoxy-benzol | sehr rotstichig gelb |
| 379 | dito | dito | 1-Amino-2-methyl--benzol | rotstichig gelb |
| 380 | dito | dito | 1-Amino-2,5-dimethyl-benzol | dito |

| Bsp. | Amin der Formel (6) | Amin der Formel D-$NH_2$ | Verbindung der Formel H - K - NHR | Farbton auf Baumwolle |
|---|---|---|---|---|
| 381 | 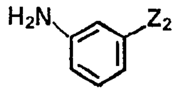 | 2-Aminonaphthalin--4,6,8-trisulfonsäure | 1-Amino-2-methoxy--benzol | sehr rotstichig gelb |
| 382 | dito | dito | 1-Amino-3-methoxy--benzol | rotstichig gelb |
| 383 | dito | dito | 1-Amino-3-acetyl--amino-6-methoxy--benzol | sehr rotstichig gelb |
| 384 | dito | dito | 1-Amino-3-acetyl--amino-6-methyl--benzol | rotstichig gelb |
| 385 | dito | dito | N-Methylanilin | rotstichig gelb |
| 386 | dito | dito | N-Äthylanilin | dito |
| 387 | dito | dito | N-Butylanilin | dito |
| 388 | dito | dito | N-(β-Hydroxyäthyl)--anilin | dito |
| 389 | dito | dito | N-(β-Sulfatoäthyl)--anilin | dito |
| 390 | dito | dito | 1-(N-Äthylamino)--3-methyl-benzol | dito |
| 391 | dito | dito | 1-(N-Äthylamino)--3-methoxy-benzol | dito |
| 392 | dito | dito | 1-Aminonaphthalin--7-sulfonsäure | dito |
| 393 | dito | dito | 1-Aminonaphthalin--6-sulfonsäure | dito |
| 394 | dito | dito | 1-Aminonaphthalin--8-sulfonsäure | stark rotstichig gelb |
| 395 | dito | dito | 1-Amino-2-methoxy--naphthalin-6-sulfon-säure | gelbstichig orange |
| 396 | dito | dito | 1-Amino-3-propionyl--amino-benzol | rotstichig gelb |
| 397 | 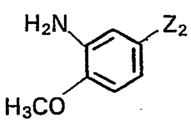 | dito | N'-Phenyl-N-(3-amino--phenyl)-harnstoff | dito |
| 398 | dito | dito | 1-Amino-3-acetyl--amino-benzol | dito |

| Bsp. | Amin der Formel (6) | Amin der Formel D-$NH_2$ | Verbindung der Formel H - K - NHR | Farbton auf Baumwolle |
|---|---|---|---|---|
| 399 | 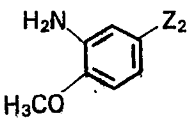 | 2-Aminonaphthalin--4,6,8-trisulfonsäure | 1-Amino-3-methyl--benzol | rotstichig gelb |
| 400 | dito | dito | 1-Amino-2,3-di-methyl-benzol | dito |
| 401 | dito | dito | 1-Amino-3-benzoyl--amino-benzol | dito |
| 402 | dito | dito | 1-Amino-3-hydroxy--acetylamino-benzol | dito |
| 403 | dito | dito | 1-Amino-3-methyl--sulfonylamino-benzol | dito |
| 404 | dito | dito | 1-Amino-2,5-di-methoxy-benzol | gelbstichig orange |
| 405 | dito | dito | 1-Amino-5-methyl--2-methoxy-benzol | sehr rotstichig gelb |
| 406 | dito | dito | 1-Amino-2-methyl--benzol | rotstichig gelb |
| 407 | dito | dito | 1-Amino-2,5-di-methyl-benzol | dito |
| 408 | dito | dito | 1-Amino-2-methoxy--benzol | sehr rotstichig gelb |
| 409 | dito | dito | 1-Amino-3-methoxy--benzol | rotstichig gelb |
| 410 | dito | dito | 1-Amino-3-acetyl--amino-6-methoxy--benzol | sehr rotstichig gelb |
| 411 | dito | dito | 1-Amino-3-acetyl--amino-6-methyl--benzol | rotstichig gelb |
| 412 | dito | dito | Anilin | dito |
| 413 | dito | dito | N-Methylanilin | dito |
| 414 | dito | dito | N-Äthylanilin | dito |
| 415 | dito | dito | N-Butylanilin | dito |
| 416 | dito | dito | N-(β-Hydroxyäthyl)--anilin | dito |
| 417 | dito | dito | N-(β-Sulfatoäthyl)--anilin | dito |

| Bsp. | Amin der Formel (6) | Amin der Formel D-$NH_2$ | Verbindung der Formel H - K - NHR | Farbton auf Baumwolle |
|---|---|---|---|---|
| 418 | 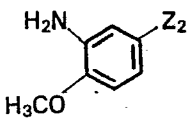 | 2-Aminonaphthalin--4,6,8-trisulfonsäure | 1-(N-Äthylamino)--3-methyl-benzol | rotstichig gelb |
| 419 | dito | dito | 1-(N-Äthylamino)--3-methoxy-benzol | dito |
| 420 | dito | dito | 1-Aminonaphthalin--7-sulfonsäure | dito |
| 421 | dito | dito | 1-Aminonaphthalin--6-sulfonsäure | dito |
| 422 | dito | dito | 1-Aminonaphthalin--8-sulfonsäure | stark rotstichig gelb |
| 423 | dito | dito | 1-Amino-2-methoxy--naphthalin-6-sulfon-säure | gelbstichig orange |
| 424 | dito | dito | 1-Amino-3-propionyl--amino-benzol | rotstichig gelb |
| 425 | 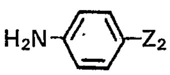 | 1-Aminonaphthalin--2,4,7-trisulfonsäure | 3-Aminophenyl--harnstoff | dito |
| 426 | dito | dito | 1-Amino-3-methyl--benzol | dito |
| 427 | dito | dito | 1-Aminonaphthalin--6-sulfonsäure | dito |
| 428 | dito | 1-Aminonaphthalin--3,6,8-trisulfonsäure | 1-Amino-3-methyl--benzol | dito |
| 429 | dito | 1-Aminonaphthalin--4,6,8-trisulfonsäure | dito | dito |
| 430 | dito | 2-Aminonaphthalin--1,5,7-trisulfonsäure | 3-Aminophenyl--harnstoff | dito |
| 431 | dito | dito | 1-Amino-3-methyl--benzol | dito |
| 432 | dito | dito | 1-Amino-3-acetyl--amino-benzol | dito |
| 433 | dito | 2-Aminonaphthalin--4,8-disulfonsäure | 3-Aminophenyl--harnstoff | dito |
| 434 | dito | dito | 1-Amino-3-methyl--benzol | dito |
| 435 | dito | dito | 1-Amino-2,3-di-methyl-benzol | dito |

| Bsp. | Amin der Formel (6) | Amin der Formel D-$NH_2$ | Verbindung der Formel H - K - NHR | Farbton auf Baumwolle |
|---|---|---|---|---|
| 436 | 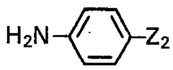 | 2-Aminonaphthalin--4,8-disulfonsäure | 1-N-(β-Hydroxyäthyl)--amino-3-methyl--benzol | rotstichig gelb |
| 437 | dito | dito | N-(β-Hydroxyäthyl)--anilin | dito |
| 438 | dito | dito | N-(β-Sulfatoäthyl)--anilin | dito |
| 439 | dito | dito | Anilin | dito |
| 440 | dito | dito | N-Methylanilin | dito |
| 441 | dito | dito | 1-Aminonaphthalin--6-sulfonsäure | dito |
| 442 | dito | dito | 1-Aminonaphthalin--7-sulfonsäure | dito |
| 443 | dito | dito | 1-Amino-2-methoxy--naphthalin-6-sulfon-säure | sehr rotstichig gelb |
| 444 | dito | dito | 1-Amino-2-methoxy--benzol | dito |
| 445 | dito | dito | 1-Amino-2,5-di-methoxy-benzol | dito |
| 446 | dito | dito | 1-Amino-3-acetyl--amino-benzol | rotstichig gelb |
| 447 | dito | dito | 1-Amino-3-hydroxy--acetylamino-benzol | dito |
| 448 | dito | 2-Aminonaphthalin--1,5-disulfonsäure | 3-Amino-phenyl--harnstoff | dito |
| 449 | dito | dito | 1-Amino-3-methyl--benzol | dito |
| 450 | dito | dito | 1-Amino-5-methyl--2-methoxy-benzol | sehr rotstichig gelb |
| 451 | dito | dito | 1-Amino-3-acetyl--amino-benzol | rotstichig gelb |
| 452 | dito | dito | 1-Amino-3-hydroxy--acetylamino-benzol | dito |
| 453 | dito | dito | N-(β-Hydroxyäthyl)--anilin | dito |
| 454 | dito | dito | N-(β-Sulfatoäthyl)--anilin | dito |

| Bsp. | Amin der Formel (6) | Amin der Formel D-$NH_2$ | Verbindung der Formel H - K - NHR | Farbton auf Baumwolle |
|---|---|---|---|---|
| 455 | 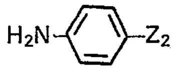 | 2-Aminonaphthalin--1,5-disulfonsäure | 1-Aminonaphthalin--6-sulfonsäure | rotstichig gelb |
| 456 | dito | 2-Aminonaphthalin--5,7-disulfonsäure | 1-Amino-3-methyl--benzol | dito |
| 457 | dito | dito | 3-Amino-phenyl--harnstoff | dito |
| 458 | dito | 2-Aminonaphthalin--3,6-disulfonsäure | 1-Amino-3-methyl--benzol | dito |
| 459 | dito | 2-Aminonaphthalin--6,8-disulfonsäure | 3-Amino-phenyl--harnstoff | dito |
| 460 | dito | dito | 1-Amino-3-methyl--benzol | dito |
| 461 | dito | dito | 1-Amino-3-acetyl--amino-benzol | dito |
| 462 | dito | dito | 1-Amino-3-hydroxy--acetylamino-benzol | dito |
| 463 | dito | dito | 1-Amino-2-methoxy--naphthalin-6-sulfon-säure | gelbstichig orange |
| 464 | dito | dito | 1-Aminonaphthalin--6-sulfonsäure | rotstichig gelb |
| 465 | dito | dito | 1-Amino-3-acetyl--aminobenzol-6--sulfonsäure | dito |
| 466 | dito | 2-Aminonaphthalin--4,8-disulfonsäure | dito | dito |
| 467 | dito | 2-Aminonaphthalin--1,5-disulfonsäure | dito | dito |
| 468 | dito | 2-Aminonaphthalin--3,6,8-trisulfonsäure | dito | dito |
| 469 | dito | 2-Aminonaphthalin--4,6,8-trisulfonsäure | dito | dito |
| 470 | dito | 2-Aminonaphthalin--5-sulfonsäure | 1-Amino-3-acetyl--aminobenzol-6--sulfonsäure | dito |
| 471 | dito | 2-Aminonaphthalin--8-sulfonsäure | dito | dito |
| 472 | dito | 2-Aminonaphthalin--6-sulfonsäure | dito | dito |

| Bsp. | Amin der Formel (6) | Amin der Formel D-$NH_2$ | Verbindung der Formel H - K - NHR | Farbton auf Baumwolle |
|---|---|---|---|---|
| 473 | 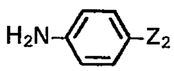 | 1-Aminonaphthalin--4-sulfonsäure | 1-Amino-3-acetyl--aminobenzol-6--sulfonsäure | rotstichig gelb |
| 474 | dito | 1-Aminonaphthalin--4,8-disulfonsäure | dito | dito |
| 475 | dito | dito | 1-Amino-3-phenyl--ureido-benzol-6--sulfonsäure | dito |
| 476 | dito | 1-Aminonaphthalin--4-sulfonsäure | 1-Amino-3-phenyl--ureido-benzol-6--sulfonsäure | dito |
| 477 | dito | 2-Aminonaphthalin--6-sulfonsäure | dito | dito |
| 478 | dito | 2-Aminonaphthalin--5-sulfonsäure | dito | dito |
| 479 | dito | 2-Aminonaphthalin--4,6,8-trisulfonsäure | dito | dito |
| 480 | dito | 2-Aminonaphthalin--3,6,8-trisulfonsäure | dito | dito |
| 481 | dito | 1-Aminonaphthalin--3,6,8-trisulfonsäure | dito | dito |
| 482 | dito | 1-Aminonaphthalin--4,6,8-trisulfonsäure | dito | dito |
| 483 | dito | 2-Aminonaphthalin--4,8-disulfonsäure | dito | dito |
| 484 | dito | 2-Aminonaphthalin--1,5-disulfonsäure | dito | dito |
| 485 | dito | 2-Aminonaphthalin--6,8-disulfonsäure | dito | dito |
| 486 | dito | 1-Aminobenzol-2--sulfonsäure | dito | dito |
| 487 | dito | 1-Aminobenzol-3--sulfonsäure | dito | dito |
| 488 | dito | 1-Aminobenzol-4--sulfonsäure | dito | dito |
| 489 | dito | 1-Amino-4-methyl--benzol-2-sulfonsäure | dito | dito |
| 490 | dito | 6-Chlor-3-amino--toluol-4-sulfonsäure | dito | dito |

| Bsp. | Amin der Formel (6) | Amin der Formel D-$NH_2$ | Verbindung der Formel H - K - NHR | Farbton auf Baumwolle |
|---|---|---|---|---|
| 491 | 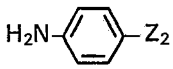 | 4-Aminoanisol-3--sulfonsäure | 1-Amino-3-phenyl--ureido-benzol-6--sulfonsäure | rotstichig gelb |
| 492 | dito | 2-Amino-5-sulfo--benzoesäure | dito | dito |
| 493 | dito | 1-Aminobenzol-2,5--disulfonsäure | dito | dito |
| 494 | dito | 1-Aminobenzol-2,4--disulfonsäure | dito | dito |
| 495 | dito | 1-Aminobenzol-2,5--disulfonsäure | N-(β-Sulfatoäthyl)--anilin | dito |
| 496 | dito | 1-Aminobenzol-4--sulfonsäure | dito | dito |
| 497 | dito | 1-Aminobenzol-2--sulfonsäure | dito | dito |
| 498 | dito | 1-Aminobenzol-2,5--disulfonsäure | N-(β-Hydroxyäthyl)--anilin | dito |
| 499 | dito | 1-Aminobenzol-2,4--disulfonsäure | dito | dito |
| 500 | dito | 1-Aminobenzol-3,5--disulfonsäure | dito | dito |
| 501 | dito | 1-Aminobenzol-4--sulfonsäure | 1-Aminonaphthalin--6-sulfonsäure | dito |
| 502 | dito | 1-Aminobenzol-2,5--disulfonsäure | dito | dito |
| 503 | dito | dito | 1-Aminonaphthalin--7-sulfonsäure | dito |
| 504 | dito | 4-Nitro-4'-amino--stilben-2,2'-di-sulfonsäure | 1-Amino-3-methyl--benzol | dito |
| 505 | dito | dito | 3-Amino-phenyl--harnstoff | dito |
| 506 | dito | 2-(3'-Sulfo-4'--aminophenyl)-6--methyl-benzthiazol--7-sulfonsäure | 1-Amino-3-methyl--benzol | dito |
| 507 | dito | dito | 3-Amino-phenyl--harnstoff | dito |
| 508 | dito | dito | N-(β-Sulfatoäthyl)--anilin | dito |

| Bsp. | Amin der Formel (6) | Amin der Formel D-$NH_2$ | Verbindung der Formel H - K - NHR | Farbton auf Baumwolle |
|---|---|---|---|---|
| 509 | 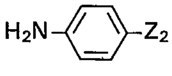 | 2-(3'-Sulfo-4'-aminophenyl)-6-methyl-benzthiazol-7-sulfonsäure | 1-Aminonaphthalin-6-sulfonsäure | rotstichig gelb |
| 510 | 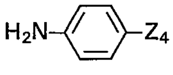 | 1-Aminobenzol-2,5-disulfonsäure | 1-Amino-3-methyl-benzol | dito |
| 511 | 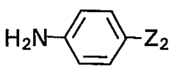 | dito | 3-Aminophenyl-harnstoff | dito |
| 512 | dito | dito | 1-Amino-3-acetyl-aminobenzol | dito |
| 513 | dito | dito | N'-Phenyl-N-(3-amino-phenyl)-harnstoff | dito |
| 514 | dito | dito | 1-Amino-3-benzoyl-amino-benzol | dito |
| 515 | dito | dito | 1-Amino-2-methoxy-5-methyl-benzol | dito |
| 516 | 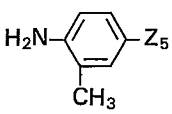 | 2-Aminonaphthalin-3,6,8-trisulfonsäure | 3-Amino-phenyl-harnstoff | dito |

*Anwendungsbeispiel 1*

20 Teile des im Beispiel 1 oder Beispiel 2 hergestellten Natriumsalzes der der allgemeinen Formel (1) entsprechenden erfindungsgemässen Verbindung werden zusammen mit 50 Teilen Harnstoff in 300 Teilen Wasser gelöst. Die Lösung wird unterhalb von 40°C in 400 Teile einer neutralen, wässrigen 4%igen Alginatverdickung eingerührt. Man gibt 10 Teile Natriumbicarbonat hinzu und füllt das Ganze mit der 4%igen Alginatverdickung auf eine Gesamtmenge von 1000 Teilen auf. Man rührt gut durch und bedruckt mit der so hergestellten Druckpaste ein Baumwollgewebe, das nach dem Trocknen bei 60°C in einem handelsüblichen Dämpferaggregat 5 Minuten lang mit Sattdampf von 100 bis 103°C behandelt wird. Der so hergestellte Druck wird anschliessend durch Spülen mit kaltem und heissem Wasser, durch Waschen mit einem neutralen Waschmittel und nochmaliges Spülen mit Wasser fertiggestellt. Nach dem Trocknen der Ware erhält man einen farbstarken rotstichig gelben Druck von sehr guter Lichtechtheit und von sehr guten Nassechtheitseigenschaften, von denen insbesondere die sehr gute Chlorbadewasserechtheit hervorzuheben ist.

*Anwendungsbeispiel 2*

Ein Gewebe aus mercerisierter Baumwolle wird mit einer wässrigen Farbstoffflotte von 20°C bei einer Flottenaufnahme von 80%, bezogen auf das Warengewicht, geklotzt; die Farbstofflösung enthält im Liter 20 g des Natriumsalzes der im Beispiel 1 beschriebenen erfindungsgemässen Azoverbindung sowie 18 g 33%ige Natronlauge. Nach dem Klotzen des Gewebes wird es auf eine Docke gewickelt, in eine Folie eingeschlagen und 8 Stunden bei Raumtemperatur liegenlassen. Anschliessend wird es durch Spülen mit kaltem Wasser, durch Behandeln in einem wenig Essigsäure enthaltenden wässrigen Bad und durch nochmaliges Spülen in kaltem und heissem Wasser fertiggestellt. Nach dem Trocknen erhält man eine farbstarke rotstichig gelbe Färbung von sehr guter Lichtechtheit und von sehr guten Nassechtheiten.

*Anwendungsbeispiel 3*

100 Teile eines Gewebes aus mercerisierter Baumwolle werden 10 Minuten lang bei 60°C in 3000 Volumenteilen eines wässrigen Färbebades behandelt, das 5 Teile des Natriumsalzes der erfindungsgemässen Verbindung von Beispiel 1 sowie 150 Teile wasserfreies Natriumsulfat enthält. Nach dieser 10minütigen Behandlung werden 15 Teile wasserfreies Natriumcarbonat und 4 Teile 33%ige Natronlauge zugesetzt. Die Färbung wird 60 Minuten bei 60°C weitergeführt. Anschliessend wird das gefärbte Gewebe in üblicher Weise, wie beispielsweise im Beispiel 7 beschrieben, fertiggestellt. Man erhält eine farbstarke, rotstichig gelbe Färbung von sehr guter Lichtechtheit und von sehr guten Nassechtheiten.

*Anwendungsbeispiel 4*

100 Teile eines Wollgewebes werden in ein 40°C warmes wässriges Färbebad eingebracht, das aus 3000 Teilen Wasser, 2 Teilen des Natriumsalzes der im Beispiel 1 beschriebenen erfindungsgemässen Verbindung, 0,15 Teile eines Anlagerungsproduktes von 12 Mol Äthylenoxid an 1 Mol Stearylamin, 2 Teile Ammoniumacetat und 2 Teile 60%ige wässrige Essigsäure besteht. Die Färbetemperatur wird innerhalb von 30 Minuten auf Kochtemperatur erhöht, und die Färbung wird anschliessend 60 Minuten lang bei 100°C weitergeführt. Nach dem üblichen Auswaschen und Fertigstellen der erhaltenen Wollfärbung zeigt dieses Wollgewebe einen farbstarken, rotstichig gelben Farbton von sehr guter Lichtechtheit und von sehr guten Nassechtheiten.

*Anwendungsbeispiel 5*

Man verfährt in der im Anwendungsbeispiel 4 angegebenen Färbeweise, ersetzt jedoch das Wollgewebe durch 100 Teile eines Gewebes aus einer Polycaprolactamfaser. Man erhält ebenfalls eine farbstarke, rotstichig gelbe Färbung von guten Gebrauchsechtheiten.

Gemäss den obigen Anwendungsbeispielen lassen sich auch die anderen, hier in den Ausführungsbeispielen und Tabellenbeispielen beschriebenen erfindungsgemässen Azoverbindungen in die Färbe- und Druckverfahren einsetzen. In analoger Weise erhält man beispielsweise mit diesen in den Anwendungsbeispielen 1 bis 5 beschriebenen Färbe- und Druckmethoden mit einem anderen Farbstoff der vorliegenden Erfindung ebenfalls sehr farbstarke Färbungen und Drucke von guten Licht- und Nassechtheitseigenschaften in den Farbtönen, die für das jeweilige Ausführungs- oder Tabellenbeispiel angegeben sind.

**Patentansprüche**

1. Wasserlösliche Monoazoverbindungen, die der allgemeinen Formel (1)

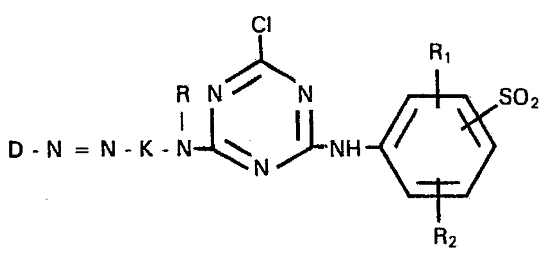

(1)

entsprechen, die wie folgt definiert ist:

D ist ein substituierter Phenylrest oder ein substituierter Naphthylrest, wobei mindestens einer der Substituenten eine wasserlöslich machende Gruppe ist oder ein solcher Substituent ist, der eine wasserlöslich machende Gruppe besitzt;

R ist ein Wasserstoffatom, eine Alkylgruppe von 1 bis 6 C-Atomen, die β-Hydroxyäthyl- oder die β-Sulfatoäthylgruppe;

$R_1$ ist ein Wasserstoff- oder ein Chloratom oder eine Alkylgruppe von 1 bis 4 C-Atomen oder eine Alkoxygruppe von 1 bis 4 C-Atomen;

$R_2$ ist ein Wasserstoffatom, eine Alkylgruppe von 1 bis 4 C-Atomen oder eine Alkoxygruppe von 1 bis 4 C-Atomen;

Y ist die Vinylgruppe oder eine Gruppe der Formel (2)

$$-CH_2-CH_2-X \quad (2)$$

in welcher X einen als Anion abspaltbaren Substituenten, ausgenommen die Sulfatogruppe, bedeutet;

K ist ein Rest der Formel (3) oder (4)

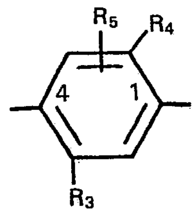

(3)

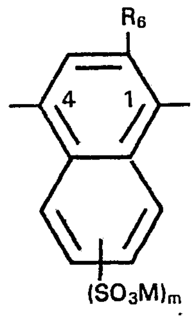

(4)

in welchen jeweils die Azogruppe an die 4-Stellung gebunden ist und

$R_3$ ein Wasserstoffatom, eine Alkylgruppe von 1 bis 4 C-Atomen, eine Alkoxygruppe von 1 bis 4 C-Atomen, eine Alkanoylaminogruppe von 2 bis 4 C-Atomen, eine Aryloylaminogruppe, die Ureido- oder eine N'-Aryl-ureido-Gruppe, eine Alkylsulfonylaminogruppe von 1 bis 4 C-Atomen, eine Arylsulfonylaminogruppe oder die Hydroxy-acetylamino-Gruppe bedeutet,

$R_4$ ein Wasserstoffatom, eine Alkylgruppe von 1 bis 4 C-Atomen, eine Alkoxygruppe von 1 bis 4 C-Atomen oder die Sulfogruppe ist,

$R_5$ ein Wasserstoffatom, eine Alkylgruppe von 1 bis 4 C-Atomen oder eine Alkoxygruppe von 1 bis 4 C-Atomen darstellt,

$R_6$ für ein Wasserstoffatom oder eine Alkoxygruppe von 1 bis 4 C-Atomen steht,

M ein Wasserstoffatom oder das Äquivalent eines Alkali- oder Erdalkali- oder eines dreiwertigen Metalls bedeutet und

m die Zahl Null oder 1 ist,

wobei R, $R_1$, $R_2$, $R_3$, $R_4$, $R_5$ und $R_6$ gleich oder voneinander verschieden sein können und das Molekül der Formel (1) zwingend mindestens zwei wasserlöslich machende Gruppen enthält.

2. Azoverbindungen nach Anspruch 1, in welchen D den Naphthylrest bedeutet, der durch 1, 2 oder 3 Sulfogruppen substituiert ist, oder den Phenylrest darstellt, der durch 1 oder 2 Sulfo- und/oder Carboxygruppen substituiert ist und der weiterhin durch einen oder zwei Substituenten aus der Gruppe Chlor, Brom, Alkyl von 1 bis 4 C-Atomen, Alkoxy von 1 bis 4 C-Atomen und Nitro substituiert sein kann.

3. Azoverbindungen nach Anspruch 1 oder 2, in welchen K den 1,4-Phenylenrest der in Anspruch 1 genannten allgemeinen Formel (3) mit $R_3$, $R_4$ und $R_5$ der in Anspruch 1 genannten Bedeutungen darstellt.

4. Azoverbindungen nach Anspruch 1, die die allgemeine Formel

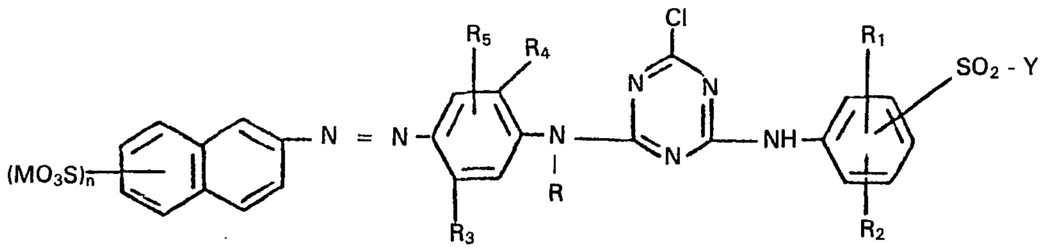

besitzen, in welcher n für die Zahl 2 oder 3 steht und R, $R_1$, $R_2$, $R_3$, $R_4$, $R_5$, M und Y die in Anspruch 1 genannten Bedeutungen haben.

5. Azoverbindungen nach Anspruch 4 der dort genannten und definierten allgemeinen Formel, in welcher R ein Wasserstoffatom ist und $R_3$ die Ureidogruppe bedeutet.

6. Azoverbindungen nach Anspruch 5, in welchen $R_4$ und $R_5$ beide für ein Wasserstoffatom stehen.

7. Azoverbindungen nach Anspruch 1 der allgemeinen Formel

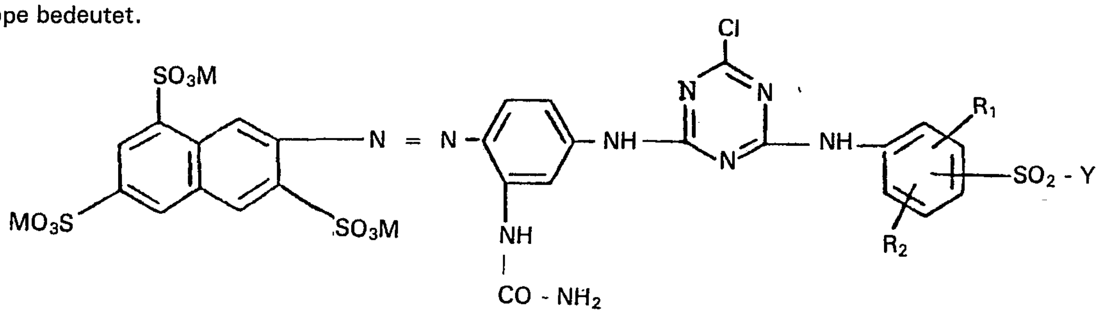

in welcher $R_1$, $R_2$, M und Y die in Anspruch 1 genannten Bedeutungen haben.

8. Azoverbindungen nach einem der Ansprüche 1 bis 7, in welchen Y die Vinylgruppe bedeutet.

9. Azoverbindungen nach einem der Ansprüche 1 bis 7, in welchen Y die $\beta$-Thiosulfatoäthyl-, die $\beta$-Phosphatoäthyl-, die $\beta$-Acetyloxyäthyl- oder die $\beta$-Chloräthyl-Gruppe bedeutet.

10. Verfahren zur Herstellung der in Anspruch 1 genannten und definierten Azoverbindungen der allgemeinen Formel (1), dadurch gekennzeichnet, dass man eine Azoverbindung der allgemeinen Formel (5)

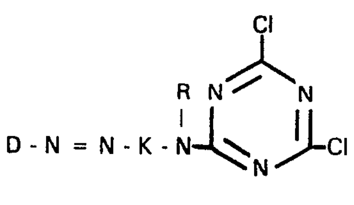

(5)

in welcher D, K und R die in Anspruch 1 genannten Bedeutungen haben, mit einem Amin der allgemeinen Formel (6)

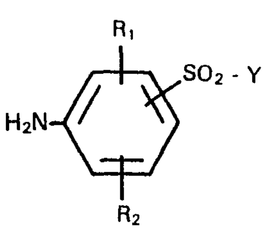

(6)

in welcher $R_1$, $R_2$ und Y die in Anspruch 1 genannten Bedeutungen haben, kondensiert

oder dass man eine Aminoazoverbindung der allgemeinen Formel (7)

$$D - N = N - K - \overset{R}{\overset{|}{N}} - H \qquad (7)$$

in welcher D, K und R die in Anspruch 1 genannten Bedeutungen haben, mit einer Dichlortriazinylaminoverbindung der allgemeinen Formel (8)

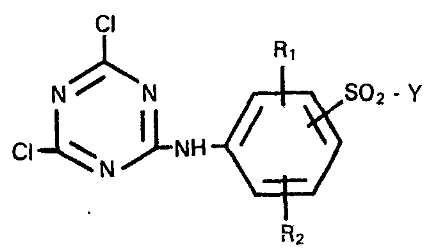

(8)

in welcher $R_1$, $R_2$ und Y die in Anspruch 1 genannten Bedeutungen haben, kondensiert,

wobei jeweils die Ausgangsverbindungen der Formeln (5) und (6) bzw. (7) und (8) so ausgewählt sind, dass beide zusammen mindestens zwei wasserlöslich machende Gruppen enthalten.

11. Verwendung der nach Anspruch 1 oder der nach Anspruch 10 hergestellten Azoverbindungen der allgemeinen Formel (1) zum Färben oder Bedrucken von hydroxygruppenhaltigen oder von carbonamidgruppenhaltigen Materialien.

**Claims**

1. Water-soluble monoazo compounds which correspond to the general formula (1)

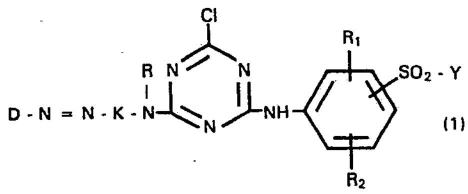
(1)

which is defined as follows:

D is a substituted phenyl radical or a substituted naphthyl radical, with the proviso that at least one of the substituents is a water-solubilizing group or is a substituent which has a water-solubilizing group;

R is a hydrogen atom, an alkyl group of from 1 to 6 C-atoms, the $\beta$-hydroxyethyl or the $\beta$-sulfatoethyl group;

$R_1$ is a hydrogen atom or a chlorine atom or an alkyl group of from 1 to 4 C-atoms or an alkoxy group of from 1 to 4 C-atoms;

$R_2$ is a hydrogen atom, an alkyl group of from 1 to 4 C-atoms or an alkoxy group of from 1 to 4 C-atoms;

Y is the vinyl group or a group of the formula (2)

$$-CH_2-CH_2-X \qquad (2)$$

in which X is a substituent, except the sulfato group, which can be split off as an anion;

K is a radical of the formula (3) or (4)

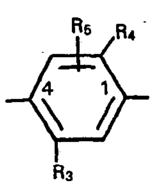
(3)

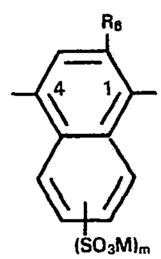
(4)

in which the azo group is bonded, in each case, at the 4-position, and

$R_3$ is a hydrogen atom, an alkyl group of from 1 to 4 C-atoms, an alkoxy group of from 1 to 4 C-atoms, an alkanoylamino group of from 2 to 4 C-atoms, an aryloylamino group, the ureido group or a N'-aryl-ureido group, an alkylsulfonylamino group of from 1 to 4 C-atoms, an arylsulfonylamino group or the hydroxy-acetylamino group,

$R_4$ is a hydrogen atom, an alkyl group of from 1 to 4 C-atoms, an alkoxy group of from 1 to 4 C-atoms or the sulfo group,

$R_5$ is a hydrogen atom, an alkyl group of from 1 to 4 C-atoms or an alkoxy group of from 1 to 4 C-atoms,

$R_6$ represents a hydrogen atom or an alkoxy group of from 1 to 4 C-atoms,

M is a hydrogen atom or the equivalent of an alkali metal or of an alkaline earth metal or of a trivalent metal, and

m is the number zero or 1,

and the radicals R, $R_1$, $R_2$, $R_3$, $R_4$, $R_5$ and $R_6$ can have the same meaning or meanings which are different from one another,

and the molecule of formula (1) contains imperatively at least two water-solubilizing groups.

2. Azo compounds according to claim 1, in which D is the naphthyl radical which is substituted by 1, 2 or 3 sulfo groups, or is the phenyl radical which is substituted by 1 or 2 sulfo and/or carboxy groups and can be additionally substituted by one or two substituents from the group of chlorine, bromine, alkyl of from 1 to 4 C-atoms, alkoxy of from 1 to 4 C-atoms and nitro.

3. Azo compounds according to claim 1 or 2, in which K is the 1,4-phenylene radical of the general formula (3) mentioned in claim 1, in which $R_3$, $R_4$ and $R_5$ have the meanings mentioned in claim 1.

4. Azo compounds according to claim 1, having the general formula

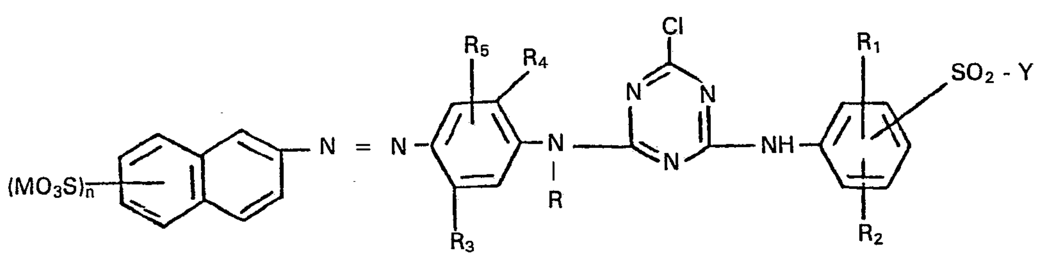

in which n is the number 2 or 3 and R, $R_1$, $R_2$, $R_3$, $R_4$, $R_5$, M and Y have the meanings mentioned in claim 1.

5. Azo compounds according to claim 4 of the general formula mentioned and defined in claim 4, in which, however, R is a hydrogen atom and $R_3$ is the ureido group.

6. Azo compounds according to claim 5, in which $R_4$ and $R_5$ are both a hydrogen atom.

7. Azo compounds according to claim 1, of the general formula

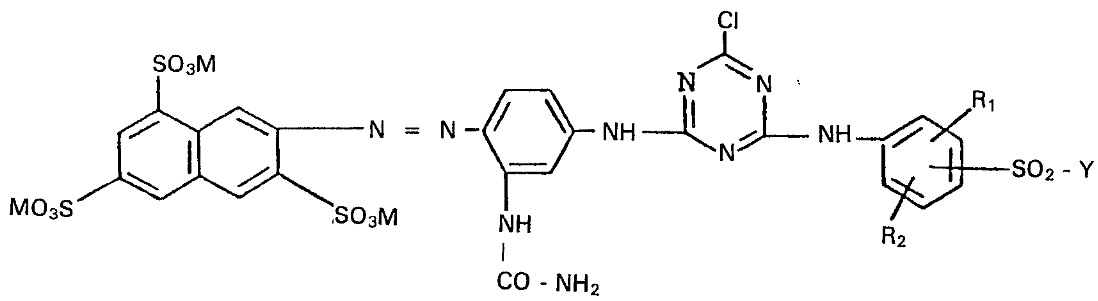

in which $R_1$, $R_2$, M and Y have the meanings mentioned in claim 1.

8. Azo compounds according to one of claims 1 to 7, in which Y is the vinyl group.

9. Azo compounds according to one of the claims 1 to 7, in which Y is the $\beta$-thiosulfatoethyl, the $\beta$-phosphatoethyl, the $\beta$-acetyloxyethyl or the $\beta$-chloroethyl group.

10. Process for the preparation of the azo compounds of the general formula (1) mentioned and defined in claim 1, characterized by that an azo compound of the general formula (5)

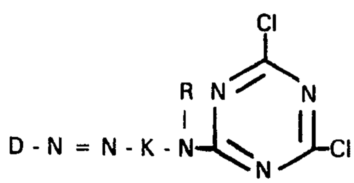
(5)

in which D, K and R have the meanings mentioned in claim 1, is reacted with an amine of the general formula (6)

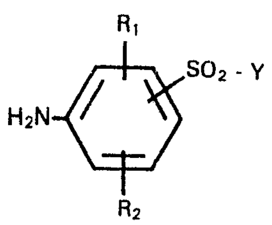
(6)

in which $R_1$, $R_2$ and Y have the meanings mentioned in claim 1,
or that an aminoazo compound of the general formula (7)

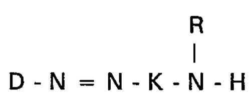
(7)

in which D, K and R have the meanings mentioned in claim 1, is reacted with a dichlorotriazinylamino compound of the general formula (8)

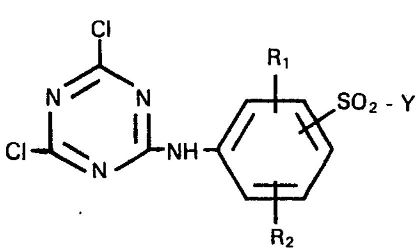
(8)

in which $R_1$, $R_2$ and Y have the meanings mentioned in claim 1,
selecting, in each case, the starting compounds of the formulae (5) and (6) or, respectively, (7) and (8) in that wise that both contain together at least two water-solubilizing groups.

11. Use of the azo compounds of the general formula (1) of claim 1, or of the azo compounds of the general formula (1) prepared according to claim 10, for dyeing or printing hydroxy groups-containing or carbonamide groups-containing materials.

**Revendications**

1. Composés monoazoïques solubles dans l'eau, qui correspondent à la formule générale (1)

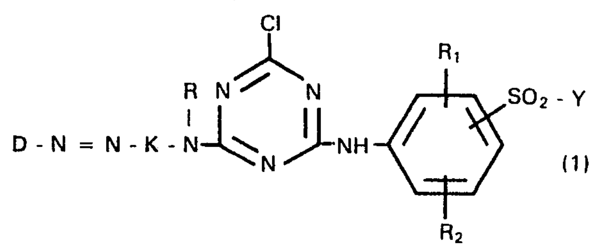
(1)

laquelle est définie comme suit:

D est un radical phényle substitué ou un radical naphtyle substitué, dans lequel au moins l'un des substituants est un groupe solubilisant dans l'eau ou est un substituant possédant un groupe solubilisant dans l'eau;

R est un atome d'hydrogène, un groupe alkyle à 1 à 6 atomes de carbone, le groupe $\beta$-hydroxyéthyle ou le groupe $\beta$-sulfatoéthyle;

$R_1$ est un atome d'hydrogène ou un atome de chlore, ou un groupe alkyle à 1 à 4 atomes de carbone ou un groupe alcoxy à 1 à 4 atomes de carbone;

$R_2$ est un atome d'hydrogène, un groupe alkyle à 1 à 4 atomes de carbone ou un groupe alcoxy à 1 à 4 atomes de carbone;

Y est le groupe vinyle ou un groupe de formule (2)

$$-CH_2-CH_2-X \qquad (2)$$

dans laquelle X est un substituant pouvant être éliminé sous la forme d'un anion, à l'exception du groupe sulfato;

K est un radical de formule (3) ou (4)

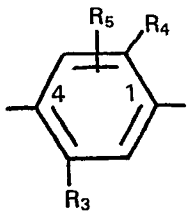

(3)

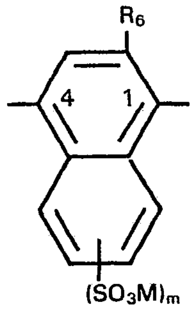

(4)

dans chacune desquelles le groupe azo est fixé sur la position 4 et

$R_3$ est un atome d'hydrogène, un groupe alkyle à 1 à 4 atomes de carbone, un groupe alcoxy à 1 à 4 atomes de carbone, un groupe alcanoylamino à 2 à 4 atomes de carbone, un groupe aryloylamino, le groupe uréido ou un groupe N'-aryl-uréido, un groupe alkylsulfonylamino à 1 à 4 atomes de carbone, un groupe arylsulfonylamino ou le groupe hydroxy--acétylamino,

$R_4$ est un atome d'hydrogène, un groupe alkyle à 1 à 4 atomes de carbone, un groupe alcoxy à 1 à 4 atomes de carbone ou le groupe sulfo,

$R_5$ est un atome d'hydrogène, un groupe alkyle à 1 à 4 atomes de carbone ou un groupe alcoxy à 1 à 4 atomes de carbone,

$R_6$ est un atome d'hydrogène ou un groupe alcoxy à 1 à 4 atomes de carbone,

M est un atome d'hydrogène ou l'équivalent d'un métal alcalin ou alcalino-terreux, ou d'un métal trivalent, et

m est le nombre zéro ou 1,

R, $R_1$, $R_2$, $R_3$, $R_4$, $R_5$ et $R_6$ pouvant être identiques les uns aux autres ou différents les uns des autres, et la molécule de formule (1) contenant obligatoirement au moins deux groupes solubilisants dans l'eau.

2. Composés azoïques selon la revendication 1, dans lesquels D signifie le radical naphtyle, qui est substitué par 1, 2 ou 3 groupes sulfo, ou représente le radical phényle, qui est substitué par 1 ou 2 groupes sulfo et/ou carboxy et qui peut en outre être substitué par un ou deux substituants du groupe comprenant le chlore, le brome, les radicaux alkyle à 1 à 4 atomes de carbone, alcoxy à 1 à 4 atomes de carbone et nitro.

3. Composés azoïques selon la revendication 1 ou 2, dans lesquels K représente le radical phénylène--1,4 de formule générale (3) mentionnée dans la revendication 1, $R_3$, $R_4$ et $R_5$ ayant la signification donnée dans la revendication 1.

4. Composés azoïques selon la revendication 1, qui ont la formule générale

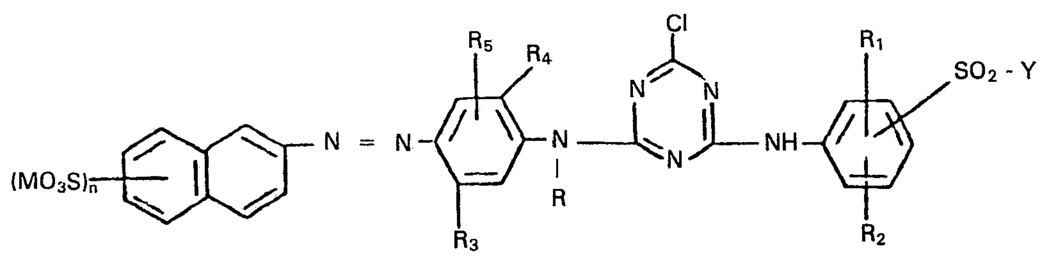

dans laquelle n représente le nombre 2 ou 3, et R, $R_1$, $R_2$, $R_3$, $R_4$, $R_5$, M et Y ont la signification donnée dans la revendication 1.

5. Composés azoïques selon la revendication 4, ayant la formule générale qui y est donnée et définie, dans laquelle R est un atome d'hydrogène et $R_3$ signifie le groupe uréido.

6. Composés azoïques selon la revendication 5, dans lesquels $R_4$ et $R_5$ sont tous les deux un atome d'hydrogène.

7. Composés azoïques selon la revendication 1, de formule générale

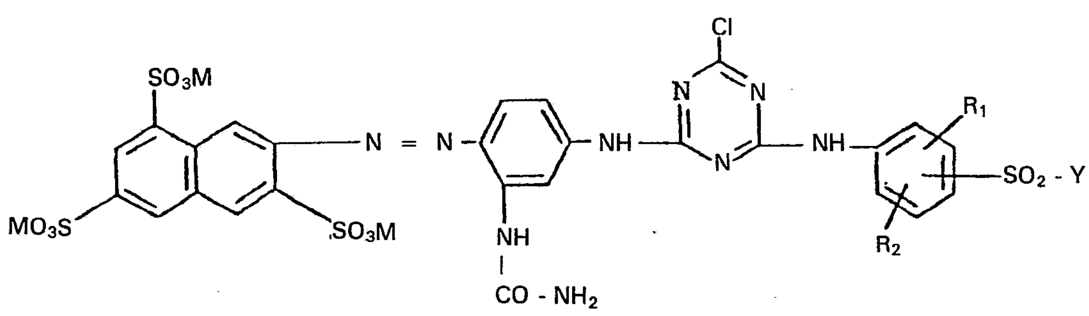

dans laquelle $R_1$, $R_2$, M et Y ont la signification donnée dans la revendication 1.

8. Composés azoïques selon l'une des revendications 1 à 7, dans lesquels Y est le groupe vinyle.

9. Composés azoïques selon l'une des revendications 1 à 7, dans lesquels Y est le groupe $\beta$-thiosulfatoéthyle, le groupe $\beta$-phosphatoéthyle, le groupe $\beta$-acétyloxyéthyle ou le groupe $\beta$-chloréthyle.

10. Procédé pour la préparation des composés azoïques de formule générale (1), donnés et définis dans la revendication 1, caractérisé en ce qu'on condense un composé azoïque de formule générale (5)

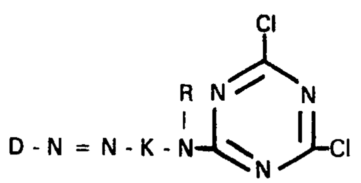

(5)

dans laquelle D, K et R ont la signification donnée dans la revendication 1, avec une amine de formule générale (6)

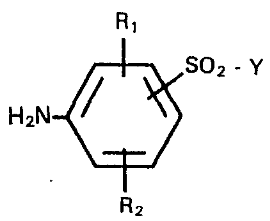

(6)

dans laquelle $R_1$, $R_2$ et Y ont la signification donnée dans la revendication 1, ou bien que l'on condense un composé amino-azoïque de formule générale (7)

R
|
D - N = N - K - N - H (7)

dans laquelle D, K et R ont la signification donnée dans la revendication 1, avec un composé dichlorotriazinylamino de formule générale (8)

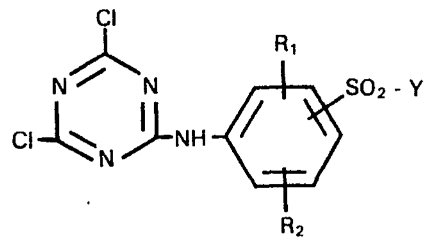

(8)

dans laquelle $R_1$, $R_2$ et Y ont la signification donnée ci-dessus, ce à l'occasion de quoi, dans chaque cas, on choisit les composés de départ de formules (5) et (6) ou (7) et (8) de façon que les deux, ensemble, contiennent au moins deux groupes solubilisants dans l'eau.

11. Utilisation des composés azoïques de formule générale (1) selon la revendication 1 ou préparés selon la revendication 10, pour la teinture ou l'impression de matières contenant des groupes hydroxy ou contenant des groupes carbonamide.